# EUROPEAN PATENT SPECIFICATION

(11) **EP 3 792 655 B1**
(45) Date of publication and mention of the grant of the patent: **28.02.2024**
(21) Application number: 20195747.9
(22) Date of filing: 11.09.2020
(51) Int. Cl.: G01S 7/52, G01S 7/521, G01S 15/50, G01S 15/88

(54) **UNDERWATER DETECTION DEVICE AND BUBBLE DETECTION METHOD**
UNTERWASSERDETEKTIONSVORRICHTUNG UND BLASENDETEKTIONSVERFAHREN
APPAREIL DE DÉTECTION SOUS-MARINE ET PROCÉDÉ DE DÉTECTION DE BULLES

(30) Priority: 12.09.2019 JP 2019166681
(43) Date of publication of application: 17.03.2021
(73) Proprietor: Furuno Electric Company Limited, Hyogo 662-8580 (JP)
(72) Inventor: YAMAMOTO, Masaya, Nishinomiya-city, Hyogo 662-8580 (JP)
(74) Representative: CSY London

(56) References cited:
- WO-A1-2018/156447
- US-A- 4 538 249
- US-A- 4 571 984

## Description

The present disclosure relates to an underwater detection device and a bubble detection method for transmitting acoustic waves into water and detecting the state of bubbles in the water based on the echoes.

Conventionally, an echo sounder and a Doppler sonar for a ship are known which measure acoustic waves reflected by an object and detect a distance to the object and a speed of the ship. In this type of device, when acoustic waves are shielded by bubbles, the distance to an object and the speed of a ship cannot be measured properly. To avoid such a situation, this type of device may use a configuration that detects the state of bubbles and controls the measurement operation.

A known bubble detection device for detecting the state of bubbles includes, for example, a transducer for transmitting acoustic waves and receiving reflected waves thereof, a signal processing module for processing a received signal based on a reflected wave from water to calculate the frequency distribution of the received signal, and a memory for storing a reference frequency distribution reflecting the state of bubbles. In the bubble detection device, a difference between the acquired frequency distribution and the reference frequency distribution stored in the memory is calculated, and when the difference is within a given range, it is determined that the size and density of the bubble are the same as the size and density of the bubble in the reference frequency distribution. For example, JP 2015/102416A described below describes a bubble detection device having the same configuration as described above.

JP 2015/102416A discloses a bubble detection device including a vibrator which transmits an ultrasonic wave with a prescribed frequency to bubbles being a measuring target and receives a reflection wave from the bubbles to convert it into an electric signal, and a control unit which drives the vibrator and processes the electric signal.
WO 2018/156447 A1 discloses a method and system for detecting a stream of bubbles in a body of sea water. A transmitter array as well as a receiver array for acoustic waves is deployed within the SOFAR channel in the body of sea water. Contributions to the receiver signals originating from acoustic waves that have reflected off of a stream of bubbles traversing the SOFAR channel are selected. A computer may be arranged to process receiver signals from the receiver array and programmed to select those contributions to these signals.

In the device described above, when reflected waves from bubbles and reflected waves from objects other than bubbles existing in water coexist, it becomes difficult to accurately detect the state of bubbles.

In view of the above problems, it is an object of the present invention to provide an underwater detection device and a bubble detection method which can more accurately detect the state of bubbles.

According to one aspect of the present invention there is provided an underwater detection device as defined in claim 1.

According to another aspect of the invention there is provided a bubble detection method as defined in claim 11.

According to a further aspect of the invention there is provided a non-transitory computer-readable recording medium storing a control program as defined in claim 12.

Preferred features of the invention are recited in the dependent claims. An underwater detection device according to an embodiment of the present invention includes: a transmission transducer for transmitting acoustic waves to a transmission region in water; a reception transducer for receiving acoustic waves reflected by bubbles in the transmission region and further reflected by bubbles in a reception region different from the transmission region; and a bubble determination module for determining the state of bubbles in water based on a signal received by the reception transducer.

According to the underwater detection device according to this embodiment, the transmission region and the reception region are different, a central axis of a transmission beam of the transmission transducer and a central axis of a reception beam of the reception transducer are non-parallel, and a transmission surface of the transmission transducer and a reception surface of the reception transducer are facing in different directions. Therefore, when there are no bubbles in the water, the reflected waves of the acoustic waves transmitted by the transmission transducer are not substantially received by the reception transducer, and even if an object other than the bubbles exist in the transmission region, the reflected wave from the object is not substantially incident on the reception transducer. On the other hand, when there are bubbles in the water, the acoustic waves transmitted by the transmission transducer hit the bubbles and repeat diffuse reflection to propagate to the reception region. Thus, the reflected waves propagated to the reception region enter the reception transducer and are received by the reception transducer. In this case, even if objects other than bubbles are mixed in the transmission region, the reflected waves from the object hardly enter the reception transducer directly.

Therefore, according to the underwater detection device according to the present embodiment, the state of bubbles in the water can be accurately determined based on the reception signal received by the reception transducer after the acoustic waves transmitted from the transmission transducer are reflected by the bubbles existing in the transmission region and then reflected by the bubbles existing in the reception region.

In the underwater detection device according to this embodiment, the central axis of the transmission beam of the transmission transducer and the central axis of the reception beam of the reception transducer are configured to be non-parallel. Thus, even if the transmission transducer and the reception transducer are close to each other, the transmission region and the reception region can be appropriately separated. Therefore, the transmission transducer and the reception transducer can be installed together on a ship bottom or the like. When the transmission transducer and the reception transducer are installed in a single transducer module, the first transducer and the second transducer can be compactly housed in the transducer module.

The transmission surface of the transmission transducer and the reception surface of the reception transducer are facing in different directions.

The underwater detection device according to the embodiment may further include a speed calculation module for calculating a ship speed, and a display for displaying the ship speed calculated by the speed calculation module and information on the state of bubbles. Thus, the user can confirm the state of bubbles when visually grasping the ship speed. Thus, the user can grasp the effect of bubbles on the ship speed.

In this case, the underwater detection device according to the present embodiment can be configured to display the ship speed and information on the state of the bubbles side by side on the display. In this way, the user can visually contrast information about the ship speed and the state of bubbles. Thus, the user can smoothly grasp the effect of bubbles on the ship speed.

In this case, the underwater detection device according to the present embodiment may be configured to determine whether to the display an indication of the ship speed based on the state of bubbles in the water. If there are many bubbles in the water, the ship speed calculated by the speed calculation module may be inaccurate. In such a case, for example, by erasing the display of the ship speed, the display of the incorrect ship speed can be suppressed.

In the underwater detection device according to the embodiment, the speed calculation module may be configured to stop the ship speed calculation when the bubble determination module detects the existence of bubbles in the water. If there are many bubbles in the water, the ship speed calculated by the speed calculation module may be inaccurate. In such a case, by not calculating the ship speed, wasteful calculation processing of the ship speed can be suppressed.

The underwater detection device according to this embodiment includes a spectrum analysis module that generate a spectrum data of the signal received by the reception transducer, and the bubble determination module may be configured to determine the state of bubbles in water based on the spectrum data. In this way, as compared with the method for evaluating the intensity of the received signal, the noise in the frequency band different from the frequency of the acoustic waves to be received can be eliminated, so that the state of bubbles in the water can be determined with high accuracy.

In this case, the bubble determination module may be configured to determine the presence of bubbles in water when an amplitude equal to or greater than a given threshold value is generated in the spectrum data. When there are no bubbles in the water, the amplitude based on the noise is generated in the spectrum data, but the amplitude over a given threshold is not generated. On the other hand, when the bubbles exist in the water, the amplitude based on the acoustic waves from the bubbles is superimposed on the amplitude based on the noise in the spectrum data. Therefore, in this case, an amplitude equal to or greater than a given threshold value is generated in the spectrum data. Therefore, it is possible to determine whether or not a bubble exists in water by determining whether or not an amplitude equal to or greater than a given threshold value is generated.

In this case, the bubble determination module may be configured to determine that bubbles exist in the water when the amplitude equal to or greater than the given threshold value is generated in the spectrum data in the frequency band of the given range including the frequency of the acoustic waves transmitted from the transmission transducer. When the transmitted acoustic waves are scattered by bubbles, the frequency of the scattered acoustic waves is included in the vicinity of the transmission frequency of the transmitted acoustic waves. Therefore, if the determination is performed in a frequency band within a given range including the transmission frequency, it is possible to more accurately determine whether or not bubbles exist in the water.

In the underwater detection device according to the present embodiment, the bubble determination module may be configured to measure the amount of bubbles in water based on a signal amount having an amplitude equal to or greater than a given threshold in the spectrum data. In this way, it is possible to further determine how much bubbles are present in the water.

The underwater detection device according to the embodiment may be configured such that one of the transmission region and the reception region is directed toward the bow direction and the other is directed toward the stern direction.

As described above, according to the present invention, it is possible to provide an underwater detection device and a bubble detection method capable of more accurately detecting the state of bubbles.

The effect or significance of the present invention will become more apparent from the following description of the embodiments. However, the following embodiments are merely examples of the embodiment of the present invention, and the present invention is not limited to those described in the following embodiments.

### BRIEF DESCRIPTION OF DRAWINGS

Fig. 1 is a schematic diagram for explaining the configuration and operation of the bubble detection device according to the first example that is not part of the invention.
Fig. 2 is a block diagram showing a configuration of a bubble detection device according to the first example.
Fig. 3 is a flowchart showing a bubble detection process according to the first example.
Fig. 4 is a schematic diagram showing a state of use of a ship speed measuring device according to a first embodiment.
Fig. 5 is a schematic diagram showing a configuration of a transducer module according to a first embodiment.
Fig. 6 is a block diagram showing a configuration of a ship speed measuring device according to a first embodiment.
Fig. 7 is a block diagram showing a configuration of a signal processing circuit according to a first embodiment.
Fig. 8 is a timing chart schematically showing the transmission timing and reception timing of the first transducer and the transmission timing and reception timing of the second transducer according to the first embodiment.
Fig. 9A is a diagram illustrating an example of spectrum data based on a first speed signal or a second speed signal obtained when there are no bubbles in water, according to the first embodiment.
Fig. 9B is a diagram showing an example of spectrum data based on the first bubble signal or the second bubble signal obtained when there are no bubbles in water according to the first embodiment.
Fig. 10A is a diagram illustrating an example of spectrum data based on a first or second speed signal obtained when there are bubbles in water according to first embodiment.
Fig. 10B is a diagram showing an example of spectrum data based on a first bubble signal or a second bubble signal obtained when there are bubbles in water according to first embodiment.
Fig. 11 is a graph of spectrum data obtained from the first speed signal in the absence of bubbles, according to the experiment of first embodiment.
Fig. 12 is a graph of spectrum data obtained from the second bubble signal in the absence of bubbles, according to the experiment of first embodiment.
Fig. 13 is a graph of spectrum data obtained from the first speed signal with a small amount of bubbles generated in the experiment of first embodiment.
Fig. 14 is a graph of spectrum data obtained from the second bubble signal with a small amount of bubbles generated in the experiment of first embodiment.
Fig. 15 is a graph of spectrum data obtained from the first speed signal in a state where a large amount of bubbles are produced in accordance with the experiment of first embodiment.
Fig. 16 is a graph of spectrum data obtained from the second bubble signal in a state where a large amount of bubbles are produced in accordance with the experiment of first embodiment.
Fig. 17A is a diagram schematically showing the display contents of the display according to first embodiment when the current ship speed is calculated.
Fig. 17B is a diagram schematically showing the display contents of the display according to first embodiment when the current ship speed is not calculated.
Fig. 18 is a flowchart illustrating a ship speed measurement process according to first embodiment.
Fig. 19A and Fig. 19B illustrate a method for determining the state of bubbles in water according to a modified example of first embodiment.
Fig. 20A and Fig. 20B illustrate a method for determining the state of bubbles in water according to a modified example of first embodiment.

### DETAILD DESCRIPTION OF THE INVENTION

Hereinafter, embodiments will be described with reference to the drawings. The first example of a bubble detection device is not covered by the claimed invention, and the first embodiment is an example in which the present invention is applied to a ship speed measuring device. However, the first embodiment is an embodiment of the present invention, and the present invention is not limited to the first embodiment.

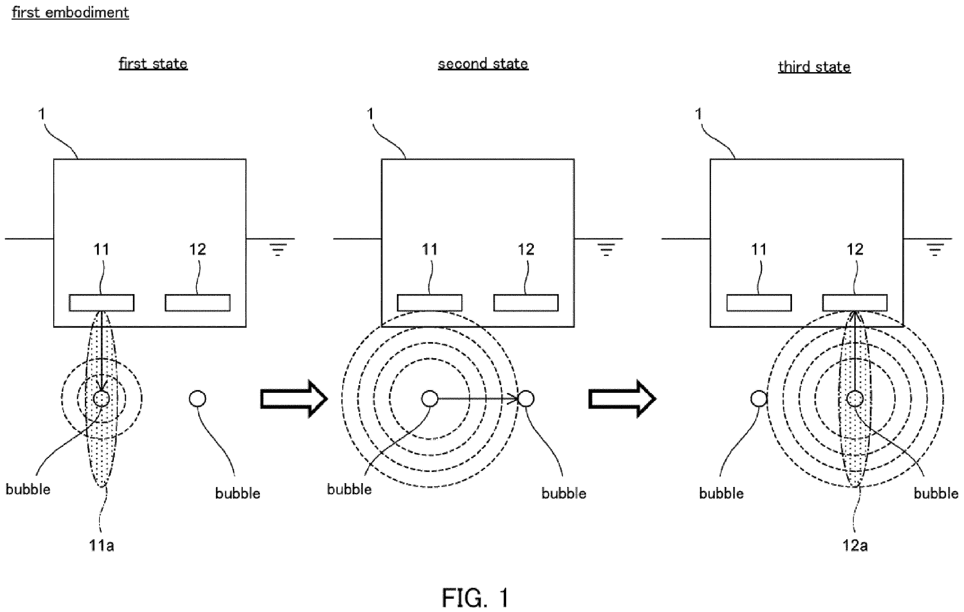

Fig. 1 is a schematic diagram for explaining the configuration and operation of the bubble detection device 1. The first state, the second state, and the third state of Fig. 1 show a process in which acoustic waves transmitted to bubbles are propagated by diffuse reflection.

The bubble detection device 1 includes a transmission transducer 11 and a reception transducer 12. The transmission transducer 11 and the reception transducer 12 are positioned in the water. The transmission transducer 11 transmits acoustic waves (For example, ultrasound) to the transmission region 11a in the water. The reception transducer 12 receives acoustic waves from a reception region 12a in water different from the transmission region 11a. The bubble detection device 1 determines the state of bubbles in water based on the receiving state of the reception transducer 12.

When there are bubbles in the water, as shown in the first state, the acoustic waves transmitted from the transmission transducer 11 is reflected by the bubble in the transmission region 11a. Subsequently, as shown in the second state, the acoustic waves reflected by the bubbles in the transmission region 11a propagate through the water to reach the other bubbles, and is reflected by the other bubbles. By such diffuse reflection, acoustic waves propagate successively between a plurality of bubbles. As shown in the third state, the acoustic waves reflected by the bubbles in the reception region 12a are received by the reception transducer 12.

On the other hand, when there are no bubbles in the water, the acoustic waves transmitted from the transmission transducer 11 are not reflected by the bubbles in the transmission region 11a. In this case, since the acoustic waves are not substantially re-reflected in the reception region 12a, the reception transducer 12 does not substantially receive the acoustic waves.

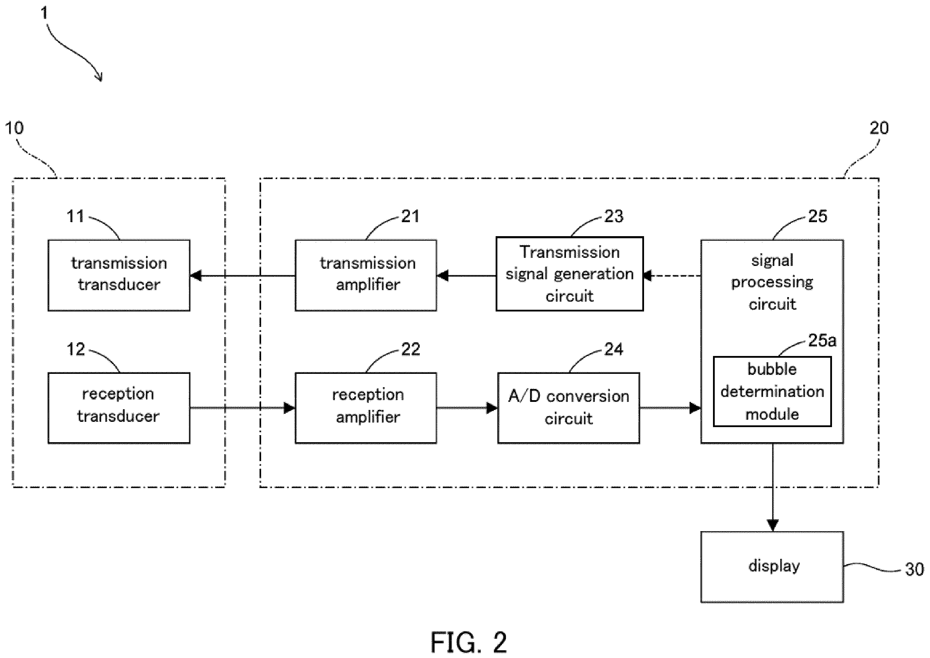

Fig. 2 is a block diagram showing the configuration of the bubble detection device 1.

The bubble detection device 1 includes a transducer module 10, a controller 20, and a display 30. The transducer module 10 includes a transmission transducer 11 and a reception transducer 12. The controller 20 includes a transmission amplifier 21, a reception amplifier 22, a transmission signal generation circuit 23, an A/D conversion circuit 24, and a signal processing circuit 25.

The signal processing circuit 25 includes an arithmetic processing circuit such as a CPU and a memory (storage medium), and executes a predetermined function by a program held in the memory. The program causes the signal processing circuit 25 to execute the function of the bubble determination module 25a. The function of the bubble determination module 25a may be realized not by software but by a hardware configuration.

The signal processing circuit 25 transmits an instruction signal to the transmission signal generating circuit 23 at a predetermined timing. In response to an instruction from the signal processing circuit 25, the transmission signal generating circuit 23 generates a transmission signal for driving the transmission transducer 11, and outputs the transmission signal to the transmission amplifier 21. The transmission signal is, for example, a pulse signal of a predetermined frequency. The transmission amplifier 21 amplifies the transmission signal and outputs it to the transmission transducer 11. Thus, the transmission transducer 11 transmits the acoustic waves to the transmission region 11a (See Fig. 1) in the water.

The reception transducer 12 receives acoustic waves from the underwater reception region 12a (See Fig. 1) and outputs a received signal to the reception amplifier 22. The reception amplifier 22 amplifies the received signal and outputs the amplified signal to the A/D conversion circuit 24. The A/D conversion circuit 24 converts the received signal from analog to digital, and outputs the converted signal to the signal processing circuit 25.

The bubble determination module 25a of the signal processing circuit 25 detects the state of bubbles in water on the basis of the received signal inputted from the A/D conversion circuit 24. For example, the bubble determination module 25a determines whether or not the reception transducer 12 receives the acoustic waves in response to the transmission of the acoustic waves from the transmission transducer 11, based on the strength of the received signal. After the signal processing circuit 25 outputs an instruction signal to the transmission signal generating circuit 23, the bubble determining module 25a monitors the reception signal during a period in which it is assumed that the acoustic waves is received. The bubble determination module 25a determines that there are bubbles in the water when the intensity of the received signal exceeds the threshold value, and determines that there are no bubbles in the water when the received signal does not exceed the threshold value.

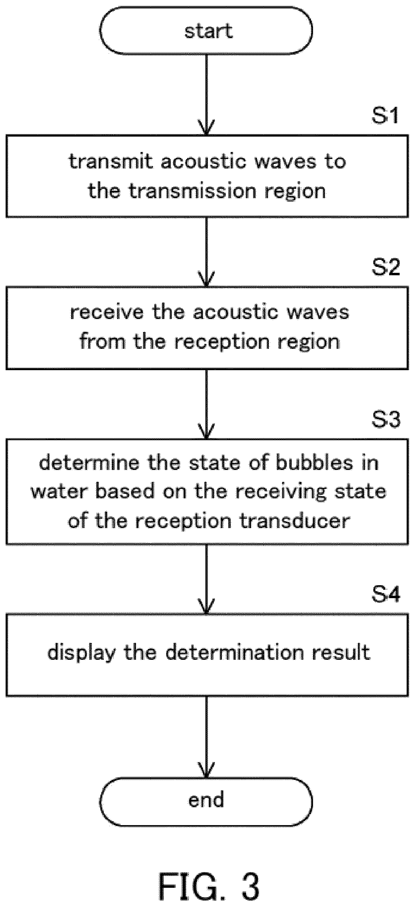

Fig. 3 is a flowchart showing bubble detection processing.

The bubble detecting process shown in Fig. 3 is automatically started when the power of the bubble detecting device 1 is turned on, and is started when the user inputs a start instruction to the bubble detecting device 1.

When the bubble detection process is started, the transmission transducer 11 transmits acoustic waves to the underwater transmission region 11a (S1). After that, during a certain period, that is, a period including a timing at which the acoustic waves reflected by the bubbles is assumed to reach the reception transducer 12 when the bubbles exist at a predetermined depth of water, the reception transducer 12 receives the acoustic waves from the reception region 12a of water (S2). Then, the bubble determination module 25a determines the state of bubbles in water based on the receiving state of the reception transducer 12 (S3). Specifically, as described above, the presence or absence of bubbles in water is determined depending on whether or not the intensity of the received signal exceeds a threshold value. Thereafter, the signal processing circuit 25 displays the determination result of step S3 on the display 30 (S4).

The determination in step S3 is not limited to the determination of the presence or absence of bubbles. For example, the distribution of bubbles indicating the depth at which bubbles are abundant may be determined by the range (range on the time axis) of the received signal exceeding the threshold. The determination of the state of bubbles may be performed by other parameter values other than the strength of the received signal. For example, the signal processing circuit 25 may perform processing such as FFT (Fast Fourier Transformation) on the received signal to generate spectrum data, and determine the state of bubbles in water based on the spectrum data. In this case, for example, the presence or absence of bubbles may be determined depending on whether the amplitude of the spectrum data exceeds a threshold value. In particular, the presence or absence of bubbles may be determined depending on whether an amplitude exceeding a threshold is generated in a frequency band within a given range including the frequency of the transmission signal. Also in this case, the distribution of bubbles indicating the depth at which bubbles are abundant may be determined by the magnitude or the range (range on the frequency axis) of the amplitude exceeding the threshold.

According to first example, the following effects can be obtained.

Since the transmission region 11a of the transmission transducer 11 is different from the reception region 12a of the reception transducer 12, when there are no bubbles in the water, the reflected waves of the acoustic waves transmitted by the transmission transducer 11 are substantially not received by the reception transducer 12. In this case, even if an object other than bubbles exists in the transmission region 11a, the reflected waves from the object do not substantially enter the reception transducer 12. On the other hand, when there are bubbles in the water, the acoustic waves transmitted by the transmission transducer 11 repeat the diffuse reflection upon hitting the bubbles and propagate to the reception region 12a. As a result, the reflected waves of the acoustic waves enter the reception transducer 12 and are received by the reception transducer 12. In this case, even if objects other than bubbles are mixed in the transmission region 11a, the reflected waves from the object do not substantially enter the reception transducer 12.

Therefore, the bubble determining module 25a can accurately determine the state of bubbles in water based on the receiving state of the reception transducer 12 (For example, whether the reception transducer 12 has received acoustic waves or not). Thus, according to the bubble detection device 1 of the first example the state of bubbles can be accurately detected. < first embodiment>

The first embodiment uses two transducers of the first transducer 111 and the second transducer 112. The first transducer 111 and the second transducer 112 alternately transmit acoustic waves to measure the ship speed. The first transducer 111 and the second transducer 112 are used not only for measuring the ship speed but also for detecting bubbles. The detection principle of bubbles is the same as in the first example, That is, when the acoustic waves are transmitted from one of the first transducer 111 and the second transducer 112, the state of the bubbles (presence or absence of bubbles, etc.) in the water is determined depending on whether the acoustic waves are received at the other. Therefore, of the first transducer 111 and the second transducer 112, the transducer of the transmitting transducer corresponds to the transmission transducer of the bubble detection device, and the other transducer corresponds to the reception transducer of the bubble detection device. That is, in the second embodiment, the transmission transducer and the reception transducer of the bubble detection device are switched between the first transducer 111 and the second transducer 112 according to the sequence of the ship speed detection.

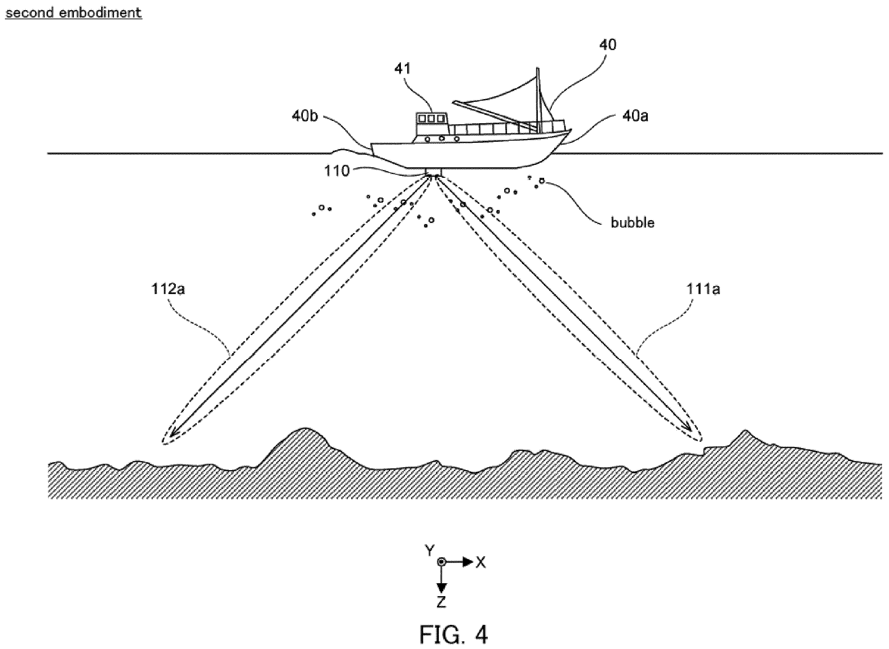

Fig. 4 is a schematic view showing a state of use of the ship speed measuring device 2 according to the first embodiment.

In Fig. 4, the X-Y plane is a horizontal plane, and the positive Z-axis direction is a vertical downward direction. The longitudinal direction of the hull 40 is directed in the X-axis direction, and the bow 40a of the hull 40 is positioned on the X-axis positive side, and the stern 40b of the hull 40 is positioned on the X-axis negative side. Fig. 4 shows, for the sake of convenience, only the transducer module 110 of the structure of the ship speed measuring device 2.

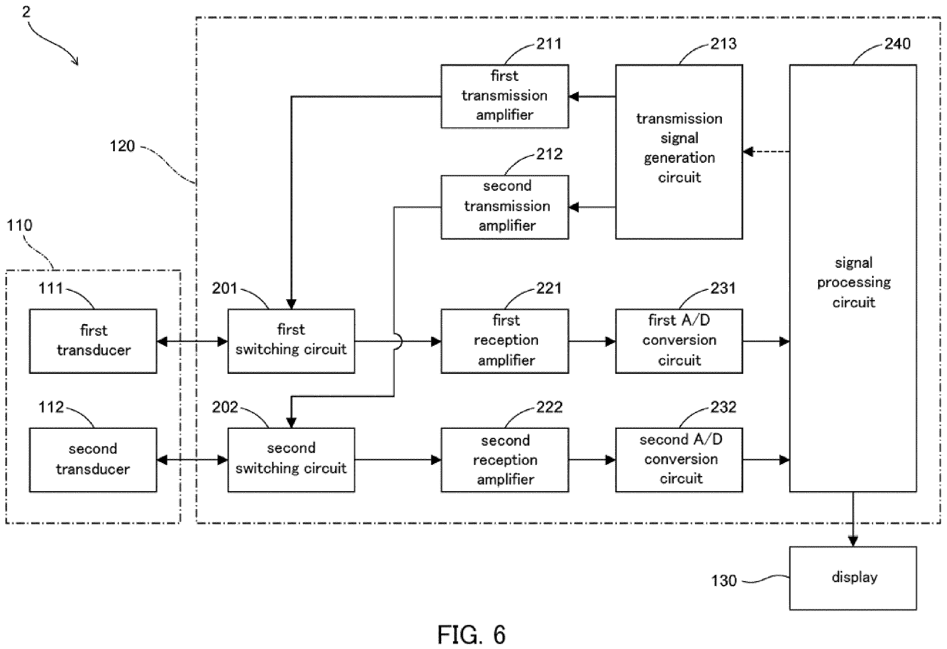

The transducer module 110 is installed in the bottom of the hull 40, for example, in the vicinity of just below the steering room 41 of the hull 40. In the example shown in Fig. 4, the transducer module 110 is positioned at the bottom of the ship slightly rearward from the center of the hull 40. Acoustic waves are transmitted from the transducer module 110 to the first region 111a and the second region 112a in the water. The first region 111a is directed toward the bow 40a, and the second region 112a is directed toward the stern 40b. The transmitted acoustic waves are reflected by a substance in water, and the reflected waves (echo) are received by a transducer module 110. A controller 120 (see Fig. 6) arranged in a steering room 41 or the like of the hull 40 calculates the speed through the water of the hull 40 (hereinafter referred to simply as "ship speed").

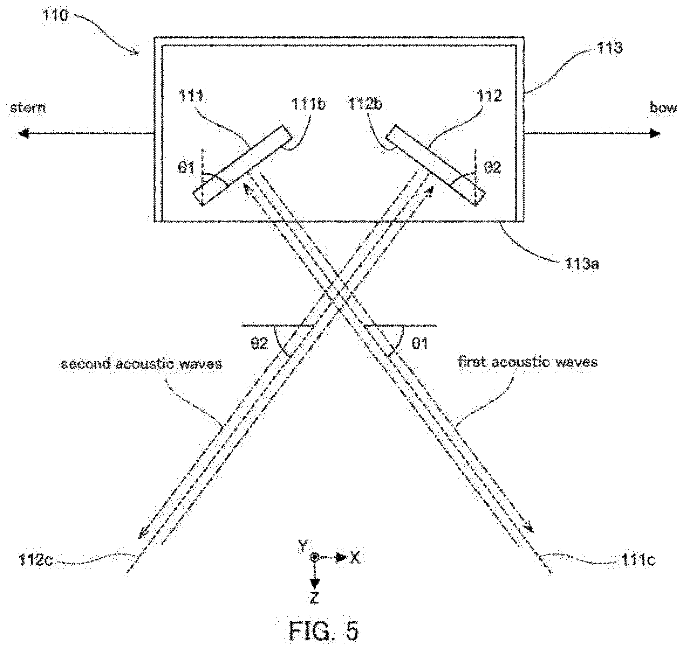

Fig. 5 is a schematic diagram showing the configuration of the transducer module 110. Fig. 5 shows an XYZ axis similar to that of Fig. 4.

The transducer module 110 includes a first transducer 111, a second transducer 112, and a housing 113. The first transducer 111 is a transducer for transmitting acoustic waves to the first region 111a in water and receiving acoustic waves from the first region 111a. The second transducer 112 is also a transducer for transmitting acoustic waves to a second region 112a different from the first region 111a in water and receiving acoustic waves from the second region 112a. The first transducer 111 is positioned on the stern 40b side and transmits first acoustic waves toward the bow 40a side. The second transducer 112 is positioned on the bow 40a side and transmits the second acoustic waves toward the stern 40b side.

The housing 113 has a cylindrical outer shape. On the positive Z-axis side of the housing 113, a circular opening 113a is formed. The first acoustic waves transmitted from the first transducer 111 and the second acoustic waves transmitted from the second transducer 112 propagate to the water through the opening 113a. The first acoustic waves and the second acoustic waves reflected by plankton, fine particles, bubbles or the like in the water pass through the opening 113a and are received by the first transducer 111 and the second transducer 112.

The first transducer 111 transmits a first acoustic waves to a first region 111a (See Fig. 4) in water and receives acoustic waves including a reflected waves (echo) of first acoustic waves from the first region 111a. The second transducer 112 transmits the second acoustic waves to the second region 112a (See Fig. 4) in water and receives acoustic waves including the reflected waves (echo) of the second acoustic waves from the second region 112a.

The transmitting and receiving surface 111b of the first transducer 111 is inclined at an angle θ1 with respect to the Z-axis direction. Thus, the depression angles of the transmission direction and the reception direction of the first transducer 111 become an angle θ1. In other words, the center axis 111c of the first region 111a (See Fig. 4) is inclined with respect to the longitudinal direction of the hull 40 (X direction) by an angle θ1. The transmitting and receiving surface 112b of the second transducer 112 is inclined at an angle θ2 with respect to the Z-axis direction. Thus, the depression angles of the transmission direction and the reception direction of the second transducer 112 become an angle θ2. In other words, the center axis 112c of the second region 112a (See Fig. 4) is inclined with respect to the longitudinal direction of the hull 40 (X direction) by an angle θ2.

A center axis 111c of the transmission beam and the reception beam of the first transducer 111 is not parallel to a center axis 112c of the transmission beam and the reception beam of the second transducer 112. The surface 111b of the first transducer 111 and the surface 112b of the second transducer 112 are inclined by 90 ° -θ1 and 90 ° -θ2, respectively, in a direction facing to each other from a state in which they are facing to same direction.

In the first embodiment, the angle θ1 is equal to the angle θ2. The angles θ1 and θ2 are set to, for example, about 50° to 80°.

The first transducer 111 has directivity extending in a predetermined angle range with respect to the central axis 111c. Specifically, the spread angle of the acoustic waves transmitted from the first transducer 111 and the spread angle of the acoustic waves received by the first transducer 111 are about 1 ° to 6 °. Similarly, the second transducer 112 has a directivity extending in a predetermined angle range with respect to the central axis 112c. Specifically, the spread angle of the acoustic waves transmitted from the second transducer 112 and the spread angle of the acoustic waves received by the second transducer 112 are about 1 ° to 6 °.

The first acoustic waves transmitted from the first transducer 111 are reflected by plankton, fine particles or the like in the first region 111a (See Fig. 4) and returned to the first transducer 111 to be received. Further, the second acoustic waves transmitted from the second transducer 112 are reflected by plankton, fine particles, or the like in the second region 112a (See Fig. 4), and returned to the second transducer 112 to be received. At this time, the frequency of the received acoustic waves is changed by the Doppler effect according to the speed of the hull 40. Therefore, the ship speed can be calculated using a signal based on the first acoustic waves transmitted from the first transducer 111 and received by the first transducer 111 (Hereinafter referred to as "first speed signal") and a signal based on the second acoustic waves transmitted from the second transducer 112 and received by the second transducer 112 (Hereinafter referred to as "second speed signal").

In the calculation of the ship speed, both the first speed signal and the second speed signal are used. Thus, even if the hull 40 is inclined in the longitudinal direction, the ship speed can be accurately calculated. That is, when the hull 40 inclines in the longitudinal direction due to the influence of waves or the like, the transmission direction of the acoustic waves transmitted from the first transducer 111 and the second transducer 112 changes, and accordingly, the Doppler shift amount (Difference between the transmitting and receiving frequencies) generated in the reflected waves of each acoustic waves changes. For example, according to the inclination of the hull 40, when the Doppler shift amount of the reflected waves received by the first transducer 111 increases, the Doppler shift amount of the reflected waves received by the second transducer 112 decreases. Therefore, the frequencies of the first speed signal and the second speed signal increase and decrease by frequencies corresponding to the inclination of the hull 40, respectively. Therefore, by averaging the speeds calculated from the Doppler shift amounts of the respective frequencies of the first speed signal and the second speed signal, the ship speed in which the influence of the inclination of the hull 40 is suppressed can be calculated. Thus, the ship speed can be accurately calculated regardless of the inclination of the hull 40.

Further, when there are bubbles in the water, as in the case described with reference to Fig. 1, the acoustic waves transmitted from one transducer are diffusely reflected by the bubbles in the water and received by the other transducer.

That is, the first acoustic waves transmitted from the first transducer 111 are repeatedly reflected by a plurality of bubbles existing between the first region 111a and the second region 112a, and propagates to the second region 112a by diffuse reflection by the plurality of bubbles. Thus, the acoustic waves propagated to the second region 112a are reflected by the bubbles existing in the second region 112a and received by the second transducer 112. Similarly, the second acoustic waves transmitted from the second transducer 112 are repeatedly reflected by a plurality of bubbles existing between the second region 112a and the first region 111a, and propagates to the first region 111a by diffuse reflection by the plurality of bubbles. Thus, the acoustic waves propagated to the first region 111a are reflected by the bubbles existing in the first region 111a and received by the first transducer 111.

Therefore, the state of the bubbles in the water can be determined using a signal based on the first acoustic waves transmitted from the first transducer 111 and received by the second transducer 112 (Hereinafter referred to as "second bubble signal") and a signal based on the second acoustic waves transmitted from the second transducer 112 and received by the first transducer 111 (Hereinafter referred to as "first bubble signal").

Fig. 6 is a block diagram showing the configuration of the ship speed measuring device 2.

The ship speed measuring device 2 includes a transducer module 110, a controller 120, and a display 130. The controller 120 includes a first switching circuit 201, a second switching circuit 202, a first transmission amplifier 211, a second transmission amplifier 212, a transmission signal generation circuit 213, a first reception amplifier 221, a second reception amplifier 222, a first A/D conversion circuit 231, a second A/D conversion circuit 232, and a signal processing circuit 240. The controller 120 and the display 130 are installed in a steering room 41 (See Fig. 4) of the hull 40.

In response to an instruction from the signal processing circuit 240, the transmission signal generating circuit 213 generates a transmission signal for driving the first transducer 111, outputs the same to the first transmission amplifier 211, generates a transmission signal for driving the second transducer 112, and outputs the same to the second transmission amplifier 212. In the first embodiment, the transmission signal generating circuit 213 generates a transmission signal so that the frequencies of the first acoustic waves and the second acoustic waves become F (MHz). The first transmission amplifier 211 amplifies the transmission signal and outputs it to a first switching circuit 201. The second transmission amplifier 212 amplifies the transmission signal and outputs it to the second switching circuit 202.

The first transducer 111 transmits first acoustic waves (ultrasonic pulse) into the water in response to a transmission signal from the first switching circuit 201. The second transducer 112 transmits second acoustic waves (ultrasonic pulse) into the water according to a transmission signal from the second switching circuit 202. The first transducer 111 and the second transducer 112 receive reflected waves (echo) reflected by plankton, fine particles, bubbles or the like in water and convert them into electric signals. Thus, a reception signal is generated. The first transducer 111 and the second transducer 112 respectively output reception signals corresponding to the received acoustic waves to the first switching circuit 201 and the second switching circuit 202.

When the transmission signal is output from the first transmission amplifier 211, the first switching circuit 201 relays the transmission signal and outputs it to the first transducer 111. When the reception signal is outputted from the first transducer 111, the first switching circuit 201 relays the reception signal and outputs it to the first reception amplifier 221. Similarly, when a transmission signal is output from the second transmission amplifier 212, the second switching circuit 202 relays the transmission signal and outputs it to the second transducer 112. Further, when the reception signal is outputted from the second transducer 112, the second switching circuit 202 relays the reception signal and outputs it to the second reception amplifier 222 .

The first reception amplifier 221 amplifies the reception signal outputted from the first switching circuit 201 and outputs it to the first A/D conversion circuit 231. The second reception amplifier 222 amplifies the reception signal outputted from the second switching circuit 202 and outputs it to the second A/D conversion circuit 232. The first A/D conversion circuit 231 converts the analog reception signal outputted from the first reception amplifier 221 into a digital reception signal and outputs it to the signal processing circuit 240. The second A/D conversion circuit 232 converts the analog reception signal outputted from the second reception amplifier 222 into a digital reception signal and outputs it to the signal processing circuit 240.

The signal processing circuit 240 calculates the ship speed based on the received signals output from the first A/D conversion circuit 231 and the second A/D conversion circuit 232, and determines the state of bubbles. Then, the signal processing circuit 240 outputs the calculated ship speed, the determination result of the bubble state, and the like to the display 130.

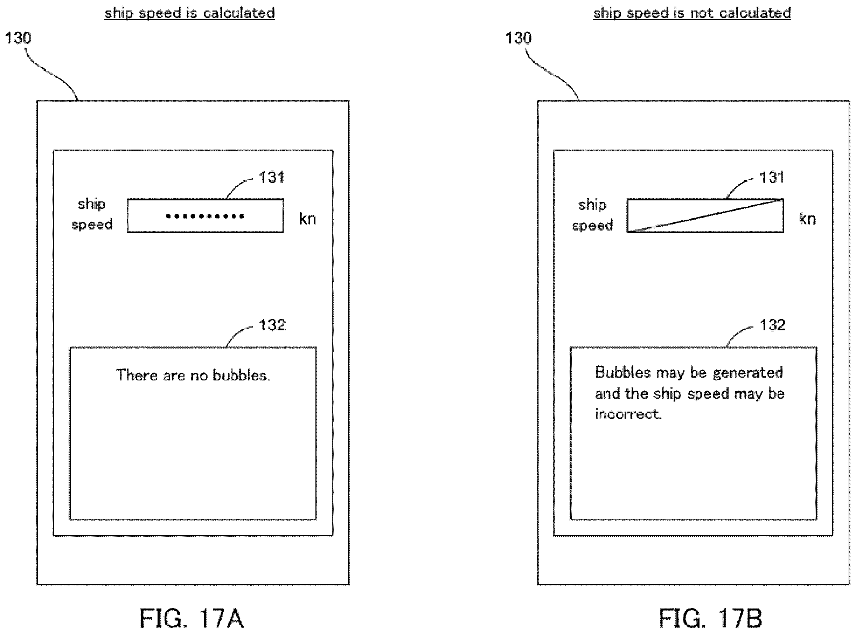

The display 130 is a display device such as a liquid crystal display. The display 130 displays the ship speed and the determination result output from the signal processing circuit 240. The display contents of the display 130 will be described later with reference to Fig. 17A and Fig. 17B.

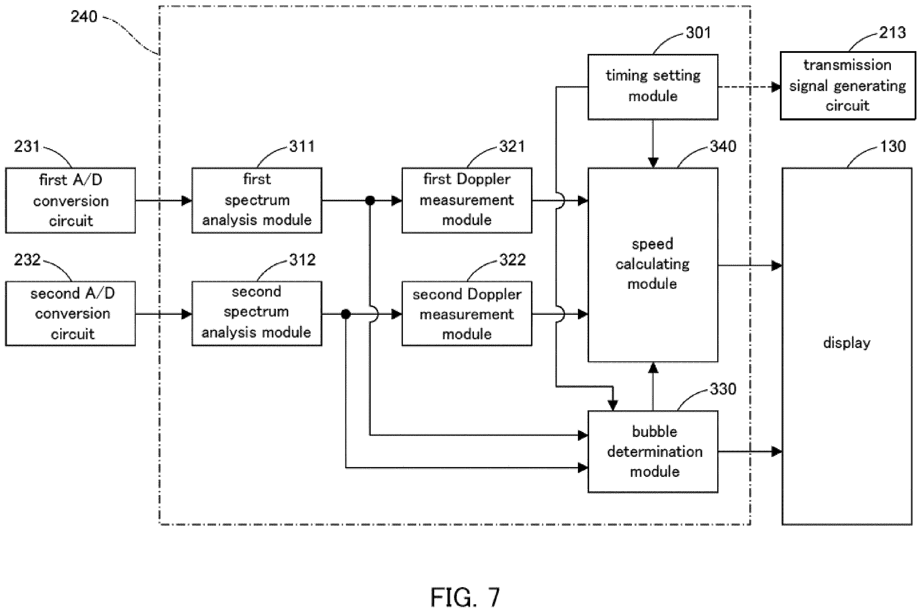

Fig. 7 is a block diagram showing the configuration of the signal processing circuit 240.

The signal processing circuit 240 includes an arithmetic processing circuit such as a CPU and a memory (storage medium), and executes a predetermined function by a program held in the memory. Fig. 7 shows a function executed by the signal processing circuit 240 according to the program as a function block. Note that some or all of these functions may be implemented by a hardware configuration instead of software.

The signal processing circuit 240 includes a timing setting module 301, a first spectrum analysis module 311, a second spectrum analysis module 312, a first Doppler measurement module 321, a second Doppler measurement module 322, a bubble determination module 330, and a speed calculation module 340.

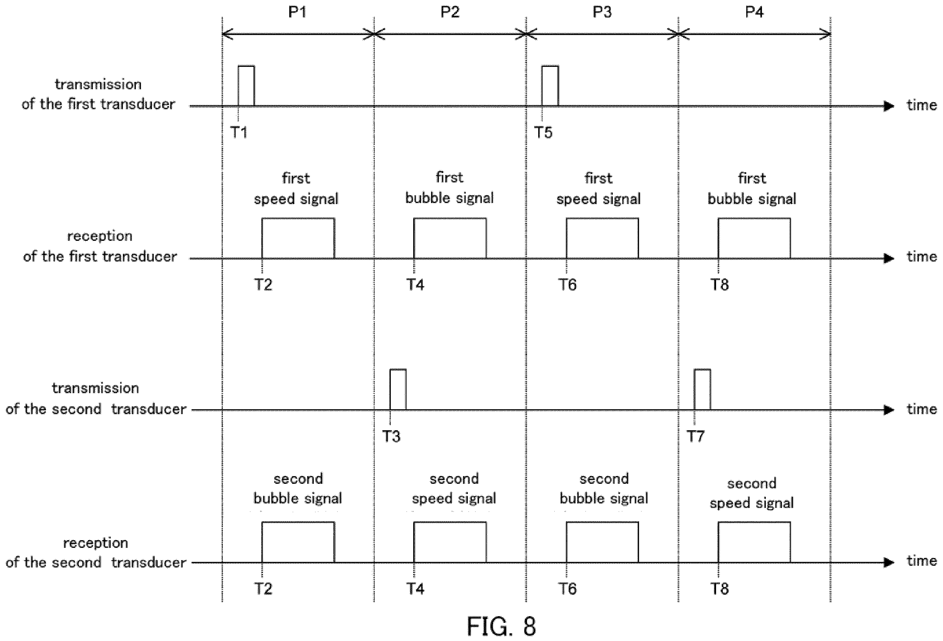

The timing setting module 301 transmits an instruction for generating a transmission signal to the transmission signal generating circuit 213. At this time, a timing setting module 301 transmits an instruction for generating a transmission signal so that the transmission timing of the first acoustic waves are different from the transmission timing of the second acoustic waves. The transmission timing will be described later with reference to Fig. 8.

The first spectrum analysis module 311 analyses the received signal inputted from the first A/D converter circuit 231 by fast Fourier transform (FFT). The second spectrum analysis module 312 analyses the received signal inputted from the second A/D converter circuit 232 by fast Fourier transform (FFT).

The received signal inputted from the first transducer 111 includes first acoustic waves received by the first transducer 111 (first speed signal) and second acoustic waves received by the first transducer 111 (first bubble signal). The first spectrum analysis module 311 outputs spectrum data obtained by analysing the first speed signal to the first Doppler measurement module 321, and outputs spectrum data obtained by analysing the first bubble signal to the bubble determination module 330.

Similarly, the received signal inputted from the second transducer 112 includes second acoustic waves received by the second transducer 112 (second speed signal) and first acoustic waves received by the second transducer 112 (second bubble signal). The second spectrum analysis module 312 outputs spectrum data obtained by analysing the second speed signal to the second Doppler measurement module 322, and outputs spectrum data obtained by analysing the second bubble signal to the bubble determination module 330.

In the spectrum data of the first speed signal output from the first spectrum analysis module 311, the first Doppler measuring module 321 measures the deviation between the frequency of the amplitude that becomes a peak (Max Value) and the transmission frequency F of the first acoustic waves (Doppler shift amount), and outputs the measured deviation amount to the speed calculating module 340. Similarly, in the spectrum data of the second speed signal output from the second spectrum analysis module 312, the second Doppler measurement module 322 measures the deviation between the frequency of the amplitude that is a peak (Max Value) and the transmission frequency F of the second acoustic waves (Doppler shift amount), and outputs the measured deviation amount to the speed calculation module 340.

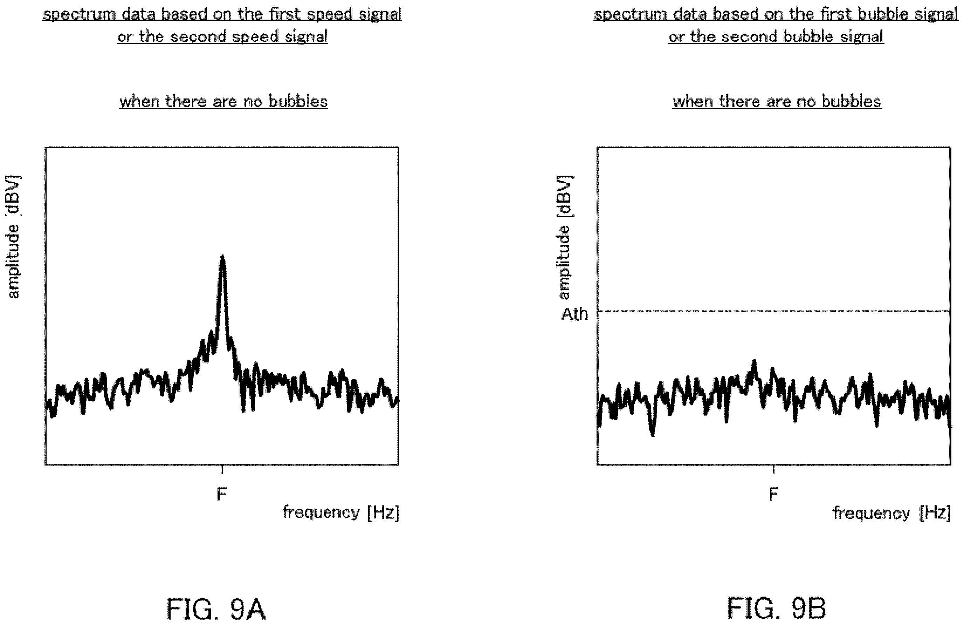

The bubble determination module 330 determines the state of bubbles based on the spectrum data of the first bubble signal output from the first spectrum analysis module 311 and the spectrum data of the second bubble signal output from the second spectrum analysis module 312. Specifically, when the amplitude of the first bubble signal is greater than or equal to a given threshold value in the spectrum data, the bubble determination module 330 determines that bubbles are generated when the corresponding second speed signal is acquired. Similarly, when an amplitude equal to or greater than a given threshold value is generated in the spectrum data of the second bubble signal, the bubble determination module 330 determines that bubbles are generated when the corresponding first speed signal is acquired. The bubble determination module 330 outputs the determination result to the speed calculation module 340 and the display 130. The bubble determination method will be described later with reference to Fig. 9A to Fig. 10B.

The speed calculation module 340 calculates a ship speed based on the first transducer 111 based on the amount of frequency shift output from the first Doppler measurement module 321, and calculates a ship speed based on the second transducer 112 based on the amount of frequency shift output from the second Doppler measurement module 322. Then, the speed calculation module 340 calculates the current ship speed by using the ship speed based on the first transducer 111 for a given period and the ship speed based on the second transducer 112 for a given period. The speed calculation module 340 outputs the calculated current ship speed to the display 130.

If bubbles exist in the water, acoustic waves reflected by plankton or fine particles may be affected by the bubbles. In this case, the first speed signal and the second speed signal are deteriorated, and proper ship speed cannot be obtained. Therefore, in the first embodiment, the bubble determination module 330 is provided, and the first speed signal and the second speed signal at the timing when bubbles are detected are not used for calculation of the ship speed at the timing.

Fig. 8 is a timing chart schematically showing the transmission timing and reception timing of the first transducer 111 and the transmission timing and reception timing of the second transducer 112.

Fig. 8 shows periods P1 to P4 as time intervals from the transmission of the acoustic waves by the first transducer 111 or the second transducer 112 to the reception of the reflected waves of the acoustic waves. In cycles P1 and P3, a first transducer 111 transmits first acoustic waves, and in cycles P2 and P4, a second transducer 112 transmits second acoustic waves.

At time T1, when the first acoustic waves are transmitted from the first transducer 111, the first acoustic waves are reflected by plankton and fine particles in the water and are received by the first transducer 111 near time T2. Thus, the first transducer 111 outputs the first speed signal. At this time, when bubbles exist in the water, the first acoustic waves are diffusely reflected by the bubble and received by the second transducer 112 at around time T2. Thus, the second transducer 112 outputs the second bubble signal. The second bubble signal is used when determining the state of bubbles, and whether or not the ship speed calculated based on the first speed signal is appropriate is determined based on the determination result of bubbles based on the second bubble signal. Thus, the processing of transmission and reception in the period P1 is completed.

Subsequently, at time T3, when the second acoustic waves are transmitted from the second transducer 112, the second acoustic waves are reflected by plankton and fine particles in the water and are received by the second transducer 112 at around time T4. Thus, the second transducer 112 outputs the second speed signal. At this time, when bubbles exist in the water, the second acoustic waves are diffusely reflected by the bubble and received by the first transducer 111 at around time T4. Thus, a first bubble signal is outputted from the first transducer 111. The first bubble signal is used when determining the state of bubbles, and whether or not the ship speed calculated based on the second speed signal is appropriate is determined based on the determination result of bubbles based on the first bubble signal. Thus, the processing of transmission and reception in the period P2 is completed.

Thus, a period for transmitting the first acoustic waves by the first transducer 111, and a period for transmitting the second acoustic waves by the second transducer 112 are alternately repeated.

Next, with reference to Fig. 9A to Fig. 10B, the calculation of the ship speed by the speed calculation module 340 and the determination of the state of bubbles by the bubble determination module 330 will be described.

The graph of Fig. 9A shows an example of spectrum data based on the first or second speed signals obtained when there are no bubbles in the water.

When there are no bubbles in the water, the amplitude becomes remarkably large in the vicinity of the transmission frequency F of the first acoustic waves and the second acoustic waves, and the width of the frequency of the part where the amplitude is large becomes narrow. Therefore, the frequency of the amplitude of the peak (Max Value) can be easily and properly specified.

In the spectrum data obtained by analysing the first speed signal as shown in Fig. 9A, the first Doppler measuring module 321 measures how far the peak of the amplitude is deviated from the transmission frequency F of the first acoustic waves. A speed calculation module 340 calculates a ship speed based on the first transducer 111 on the basis of a frequency deviation amount (Doppler shift amount). Similarly, in the spectrum data obtained by analysing the second speed signal as shown in Fig. 9A, the second Doppler measuring module 322 measures how far the peak of the amplitude is shifted from the transmission frequency F of the second acoustic waves. A speed calculation module 340 calculates a ship speed based on the second transducer 112 on the basis of a frequency deviation amount (Doppler shift amount).

The graph of Fig. 9B shows an example of spectrum data based on the first bubble signal or the second bubble signal obtained when there are no bubbles in the water.

The bubble determination module 330 determines whether or not an amplitude equal to or greater than a given threshold value Ath is generated in the spectrum data based on the first bubble signal as shown in Fig. 9B. The threshold Ath is set so that the noise and the amplitude based on the bubble can be discriminated. That is, the threshold Ath is set to be larger than the amplitude of the noise generated in the absence of the bubble and smaller than the amplitude that can be generated in the presence of a predetermined amount of the bubbles. The threshold value Ath can be appropriately adjusted according to how much amount of bubbles is detected.

In the case of the graph of Fig. 9B, it is determined that no bubbles are generated because no amplitude greater than the threshold value Ath is generated. Therefore, it is determined that the second speed signal acquired at the same timing as the first bubble signal in this case is appropriate, and the ship speed based on the second speed signal is appropriate.

Similarly, the bubble determination module 330 determines whether or not an amplitude equal to or greater than a given threshold Ath is generated in the spectrum data based on the second bubble signal as shown in Fig. 9B. In the case of the graph of Fig. 9B, it is determined that no bubbles are generated because no amplitude greater than the threshold value Ath is generated. Therefore, it is determined that the first speed signal acquired at the same timing as the second bubble signal in this case is appropriate, and the ship speed based on the first speed signal is appropriate.

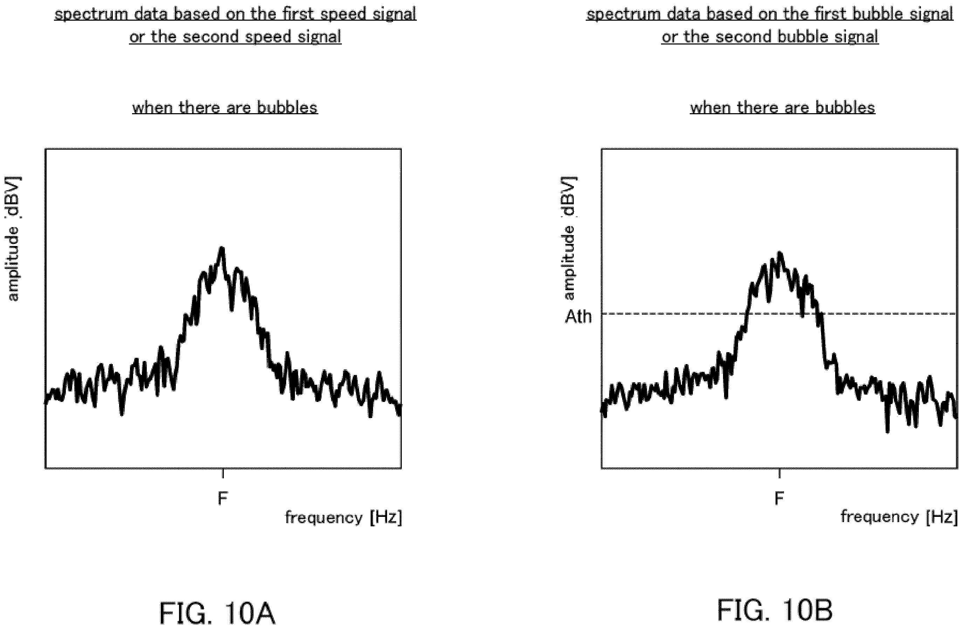

The graph of Fig. 10A shows an example of spectrum data based on a first speed signal or a second speed signal obtained when there are bubbles in water.

When there are bubbles in the water, the acoustic waves reflected by the bubbles returns to the transducer that transmits the acoustic waves, so that the amplitude remarkably increases in the vicinity of the transmission frequency F, and the width of the frequency at which the amplitude increases widens. Therefore, it becomes difficult to specify the frequency of the amplitude of the peak (Max Value), and there is a possibility that the calculation accuracy of the ship speed is lowered.

The graph of Fig. 10B shows an example of spectrum data based on a first bubble signal or a second bubble signal that is obtained when there are bubbles in water.

In the case of the spectrum data based on the first bubble signal as shown in Fig. 10B, since an amplitude equal to or greater than the threshold value Ath is generated, it is determined that bubbles are generated. Therefore, the second speed signal acquired at the same timing as the first bubble signal in this case has a large deterioration in calculating the speed, and it is determined that the ship speed based on the second speed signal is inappropriate.

Similarly, in the case of the spectrum data based on the second bubble signal as shown in Fig. 10B, since an amplitude equal to or greater than the threshold value Ath is generated, it is determined that bubbles are generated. Therefore, the first speed signal acquired at the same timing as the second bubble signal in this case has a large deterioration in calculating the speed, and it is determined that the ship speed based on the first speed signal is inappropriate.

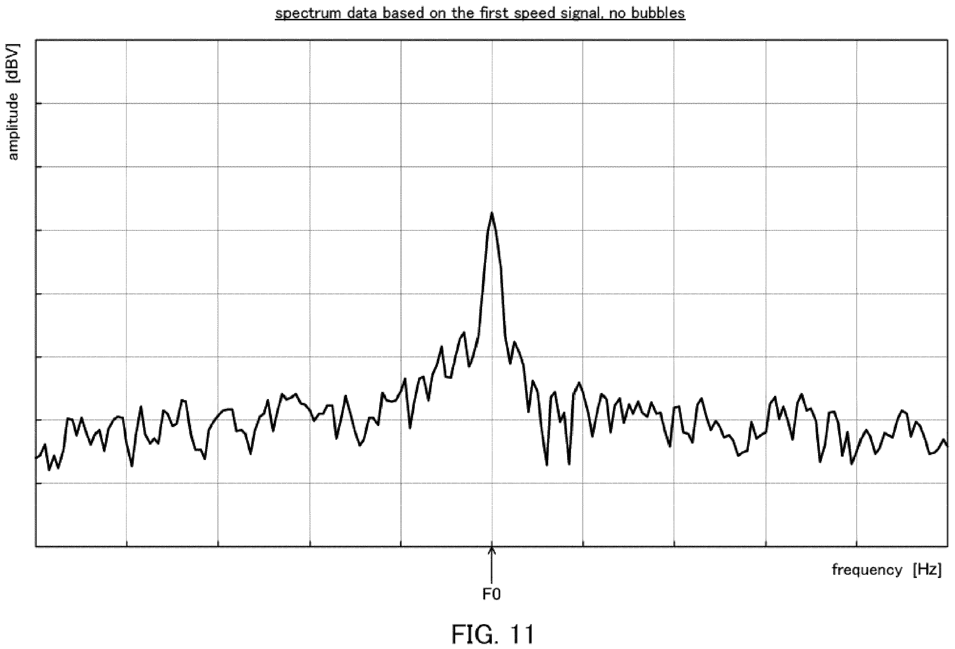

Next, an experiment performed by the inventor will be described with reference to Fig. 11 to Fig. 16.

The inventor has artificially created a state in which bubbles are not generated, a state in which bubbles are generated in a small amount, and a state in which bubbles are generated in a large amount with respect to actual sea water. At this time, the speed through the water was 0 kn without air bubbles, about 4 kn with a small amount of air bubbles, and about 5 kn with a large amount of air bubbles. In each state, the inventor caused the first transducer 111 to transmit the first acoustic waves at a transmission frequency of F0 (Hz), and caused the first transducer 111 and the second transducer 112 to receive the reflected waves (echo). Based on the first speed signal of the first transducer 111 and the second bubble signal of the second transducer 112, the inventor performed fast Fourier transform (FFT) to acquire spectrum data.

Fig. 11 is a graph of spectrum data obtained from the first speed signal in the absence of bubbles. Fig. 11 shows spectrum data obtained by averaging spectrum data based on the first speed signal for a given period. As described above, the ship speed is set to 0 kn in a state where no bubbles are generated. According to the experimental result shown in Fig. 11, at the same frequency F0 as that of the first acoustic waves, the amplitude increases at a narrow frequency width. Therefore, in this case, it can be seen that the proper ship speed can be obtained based on the first speed signal.

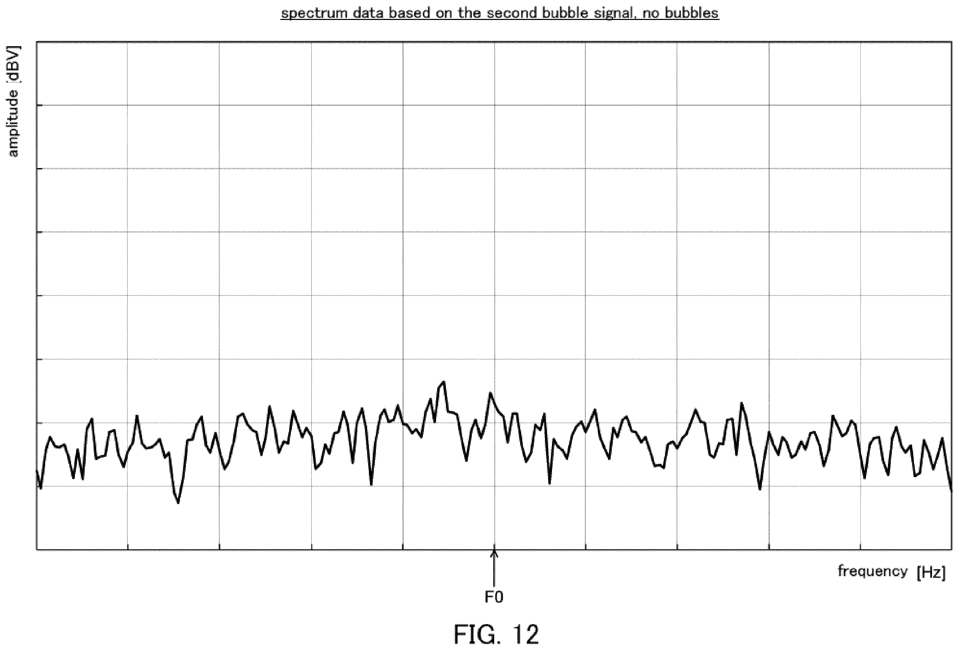

Fig. 12 is a graph of spectrum data obtained from the second bubble signal in the absence of bubbles. Fig. 12 shows spectrum data obtained by averaging spectrum data based on the second bubble signal for a given period. As shown in Fig. 12, although there is a noise component in the spectrum data based on the second bubble signal, there is clearly no frequency band with a large amplitude. Therefore, in this case, it is understood that the state of bubbles can be appropriately determined based on the second bubble signal.

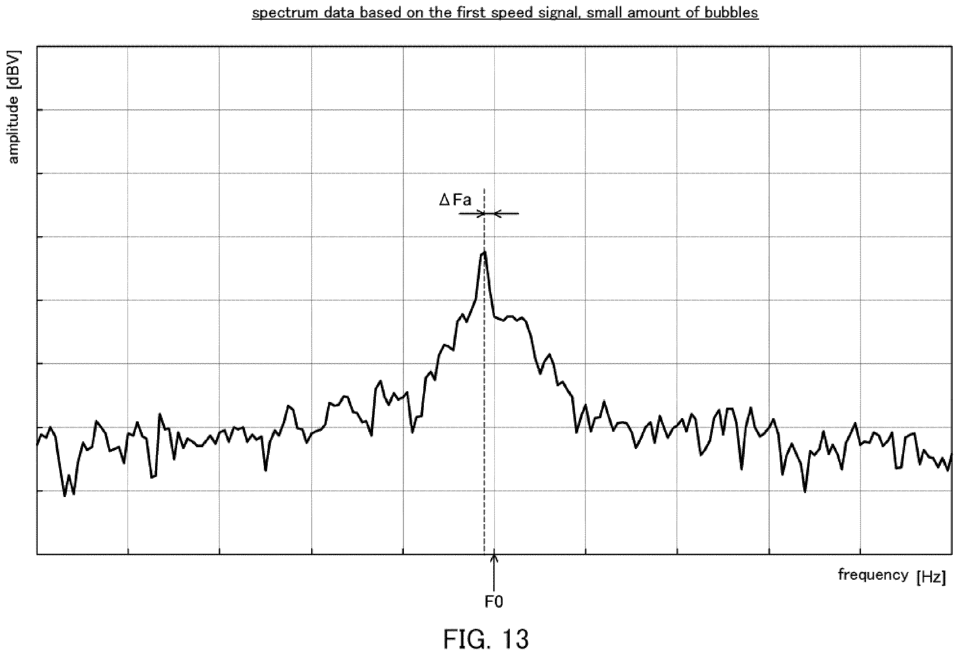

Fig. 13 is a graph of spectrum data obtained from the first speed signal with a small amount of bubbles. As described above, the ship speed is set to about 4 kn in a state where a small amount of bubbles are generated. Thus, the Doppler shift amount ΔFc (Hz) with respect to the transmission frequency F0 of the first acoustic waves is calculated. According to the experimental result shown in Fig. 13, the amplitude increases in the vicinity of the frequency shifted by about ΔFa (Hz) from the transmission frequency F0 of the first acoustic waves. Comparing ΔFc and ΔFa in this case, it was found that ΔFc and ΔFa had almost the same values. Therefore, in this case as well, it can be seen that the proper ship speed can be obtained based on the first speed signal.

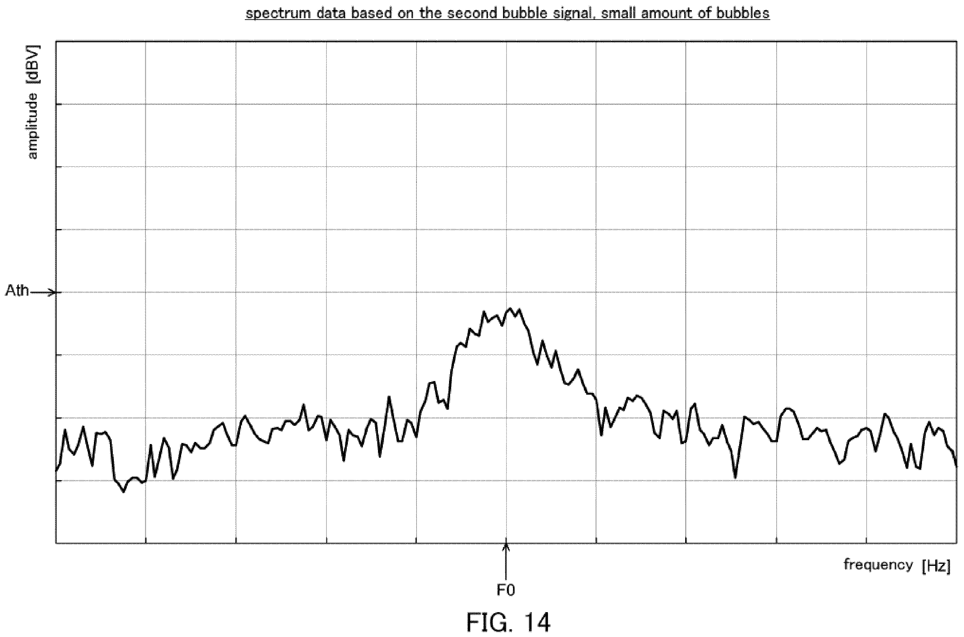

Fig. 14 is a graph of spectrum data obtained from the second bubble signal in a state where a small amount of bubbles are generated. In the case of Fig. 14, the amplitude is larger in the vicinity of the transmission frequency F0 of the first acoustic waves as compared with Fig. 12. It is considered that this is because the first acoustic waves transmitted by the first transducer 111 are received by the second transducer 112 by a small amount of bubbles existing in the water. In this case, as shown in Fig. 14, the state of the bubbles can be determined by setting the threshold value Ath of the amplitude. That is, since the amplitude of the entire spectrum data is below the threshold value Ath, it can be determined that there are substantially no bubbles in the water that affect the calculation result of the ship speed, and it is found that the ship speed based on the first speed signal is appropriate.

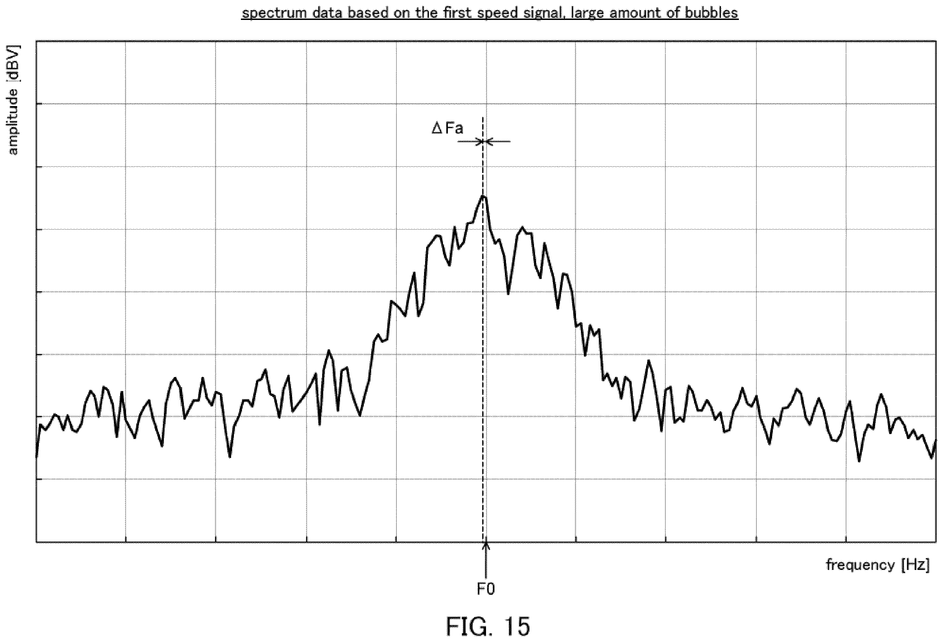

Fig. 15 is a graph of spectrum data obtained from the first speed signal in a state where a large amount of bubbles are generated. As described above, the ship speed is set to about 5 kn in a state where a large amount of bubbles are generated. Thus, the Doppler shift amount ΔFc (Hz) with respect to the transmission frequency F0 of the first acoustic waves is calculated. According to the experimental result shown in Fig. 15, the amplitude increases in the vicinity of the frequency shifted by about ΔFa (Hz) from the transmission frequency F0 of the first acoustic waves. Comparing ΔFc and ΔFa in this case, it was found that ΔFc and ΔFa were not substantially the same value. Therefore, in this case, it can be seen that the proper ship speed cannot be obtained based on the first speed signal.

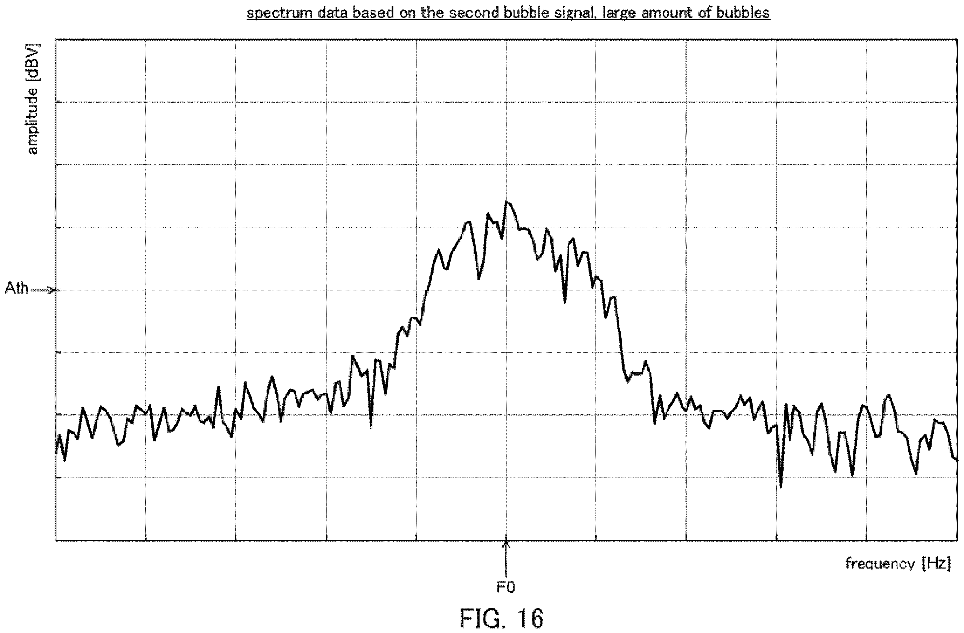

Fig. 16 is a graph of spectrum data obtained from the second bubble signal in a state where a large amount of bubbles are generated. In the case of Fig. 16, the amplitude is further increased in the vicinity of the transmission frequency F0 of the first acoustic waves as compared with Fig. 14. Also in this case, as shown in Fig. 16, the state of the bubble can be determined by setting the threshold value Ath of the amplitude. In other words, since the amplitude of part of the spectrum data is equal to or greater than the threshold value Ath, it can be determined that there are bubbles in the water that affect the calculation result of the ship speed, and it is found that the ship speed obtained at the same timing is inappropriate.

Next, with reference to Fig. 17A and Fig. 17B, the display contents of the display 130 will be described.

In the first embodiment, as described above, the propriety of the second speed signal is determined based on the first bubble signal acquired at the same timing, and the propriety of the first speed signal is determined based on the second bubble signal acquired at the same timing. Further, in the first embodiment, an average is calculated based on the first speed signal and the second speed signal determined to be appropriate in the immediately preceding given period, and the current ship speed is calculated. At this time, when the bubble determination module 330 determines that there are bubbles in the water based on the first bubble signal and the second bubble signal in the immediately preceding given period, the speed calculation module 340 stops the calculation of the current ship speed. That is, when it is determined based on the first bubble signal and the second bubble signal in the immediately preceding given period that there are bubbles in the water and the ship speed at the present point is not appropriate, the ship speed at the present point is not calculated and is not displayed on the display 130.

Fig. 17A is a diagram schematically showing the display contents of the display 130 when the current ship speed is calculated based on the ship speed of the immediately preceding given cycle. The ship speed display area 131 is an area for displaying the ship speed, and the bubble information display area 132 is an area for displaying information on the state of bubbles determined by the bubble determination module 330. The ship speed display area 131 and the bubble information display area 132 are arranged vertically. In the case of Fig. 17A, since the current ship speed is calculated, the ship speed is displayed in the ship speed display area 131, and the message "There are no bubbles." is displayed in the bubble information display area 132.

Fig. 17B is a diagram schematically showing the display contents of the display 130 when the current ship speed is not calculated based on the ship speed of the immediately preceding given cycle. In this case, a diagonal line indicating that the current ship speed is not calculated is displayed in the ship speed display area 131. In the bubble information display area 132, "Bubbles may be generated and the ship speed may be incorrect." is displayed.

The display method of the ship speed and the presence/absence of bubbles is not limited to the display method shown in Fig. 17A and Fig. 17B. For example, when the ship speed is calculated, the bubble information is not displayed, and the bubble information may be displayed only when the ship speed cannot be calculated. In this case, the character "bubble" may be simply displayed in or near the ship speed display area 131.

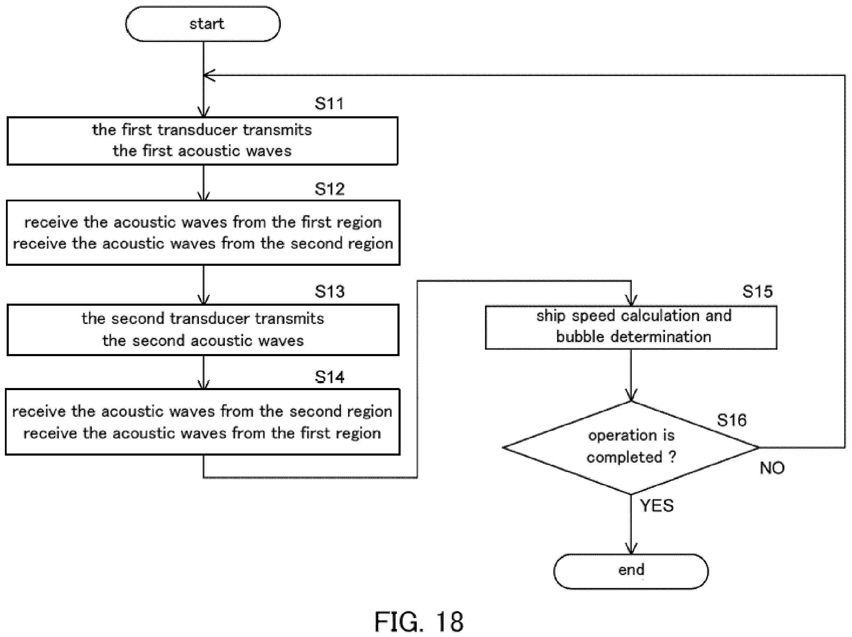

Fig. 18 is a flowchart showing the ship speed measuring process.

The ship speed measuring process shown in Fig. 18 is automatically started when the power supply of the ship speed measuring device 2 is turned on. Alternatively, when the user inputs an instruction for starting the ship speed measurement to the ship speed measuring device 2, the process of Fig. 18 may be started.

When the ship speed measuring process is started, the signal processing circuit 240 causes the first transducer 111 to transmit the first acoustic waves to the first region 111a in water (S 11). Then, the signal processing circuit 240 causes the first transducer 111 to receive the acoustic waves from the first region 111a (reflected waves of the first acoustic waves), and causes the second transducer 112 to receive the acoustic waves from the second region 112a (S 12). Thus, the first transducer 111 outputs a first speed signal, and the second transducer 112 outputs a second bubble signal. The processing in steps 11 and 12 corresponds to one period based on the transmission of the first transducer 111 shown in Fig. 8.

Subsequently, the signal processing circuit 240 causes the second transducer 112 to transmit the second acoustic waves to the second region 112a in water (S 13). Then, the signal processing circuit 240 causes the second transducer 112 to receive the acoustic waves from the second region 112a (reflected waves of the second acoustic waves), and causes the first transducer 111 to receive the acoustic waves from the first region 111a (S 14). Thus, the second transducer 112 outputs a second speed signal, and the first transducer 111 outputs a first bubble signal. The processing in steps 13 and 14 corresponds to one period based on the transmission of the second transducer 112 shown in Fig. 8.

Subsequently, the signal processing circuit 240 calculates the ship speed based on the first speed signal acquired in step 12, and calculates the ship speed based on the second speed signal acquired in step 14. Further, the signal processing circuit 240 determines the state of bubbles based on the second bubble signal acquired in step 12, and determines the state of bubbles based on the first bubble signal acquired in step 14. The signal processing circuit 240 stores the calculated ship speed and the result of bubble determination in a memory in association with each other (S 15). The signal processing circuit 240 repeats the processing of steps S11 to S15 until the ship speed calculating operation is completed (S 16). As a result, the ship speed and the bubble determination result obtained in each cycle are sequentially stored in the memory of the signal processing circuit 240.

Thereafter, as described above, when the bubble determination module 330 determines that there are bubbles in the water based on the first bubble signal and the second bubble signal in the given period, the speed calculation module 340 stops the calculation of the current ship speed. A speed calculation module 340 calculates an average based on the first speed signal and the second speed signal determined to be appropriate in a given period, and calculates the current ship speed. When the current ship speed is calculated, the signal processing circuit 240 displays the calculated ship speed and bubble information based on the result of bubble determination on the display 130 as shown in Fig. 17A. When the current ship speed is not calculated, the signal processing circuit 240 displays, as shown in Fig. 17B, a diagonal line indicating that the ship speed is not calculated on the ship speed display area 131, and displays bubble information on the bubble information display area 132 as shown in Fig. 17B.

### <effect of the first embodiment>

According to the first embodiment, the following effects can be achieved.

The first region 111a of the first transducer 111 is different from the second region 112a of the second transducer 112. Therefore, when there are no bubbles in the water, the reflected waves of the acoustic waves transmitted by the first transducer 111 are not substantially received by the second transducer 112, and even if an object other than the bubbles exists in the first region 111a, the reflected waves from the object are not substantially incident on the second transducer 112. Similarly, when there are no bubbles in the water, the reflected waves of the acoustic wave transmitted by the second transducer 112 are substantially not received by the first transducer 111, and even if an object other than the bubbles exists in the second region 112a, the reflected waves from the object are substantially not incident on the first transducer 111.

On the other hand, when there are bubbles in the water, the acoustic waves transmitted by the first transducer 111 are hit by the bubbles and propagates to the second region 112a by repeating diffuse reflection. Thus, the reflected waves propagated in the second region 112a enter the second transducer 112 and are received by the second transducer 112. In this case, even if objects other than bubbles are mixed in the first region 111a, the reflected waves from the object do not directly enter the second transducer 112. Similarly, when there are bubbles in the water, the acoustic waves transmitted by the second transducer 112 are hit by the bubbles and propagate to the first region 111a by repeating diffuse reflection. Thus, the reflected waves propagated in the first region 111a enter the first transducer 111 and are received by the first transducer 111. In this case, even if objects other than bubbles are mixed in the second region 112a, the reflected waves from the object hardly directly enter the first transducer 111.

Therefore, according to the first embodiment, the state of bubbles in water can be accurately determined based on at least one of the following: the first reception signal in which the acoustic waves transmitted from the second transducer 112 are reflected by the bubbles existing in the second region 112a and then reflected by the bubbles existing in the first region 111a and received by the first transducer 111 (first bubble signal); and the second reception signal (second bubble signal) in which the acoustic waves transmitted from the first transducer 111 are reflected by the bubbles existing in the first region 111a and then reflected by the bubbles existing in the second region 112a and received by the second transducer 112.

The ship speed can be calculated by a reception signal based on the reflected waves of the first acoustic waves received by the first transducer 111 (first speed signal) and a reception signal based on the reflected waves of the second acoustic waves received by the second transducer 112 (second speed signal). That is, in the first embodiment, the first transducer 111 and the second transducer 112 are used for both determination of the state of bubbles and calculation of the ship speed. Therefore, in the ship speed measuring device 2 including the first transducer 111 and the second transducer 112, the state of bubbles can be detected without adding a separate configuration.

As shown in Fig. 5, the center axes 111c of the transmission beam and the reception beam of the first transducer 111 and the center axes 112c of the transmission beam and the reception beam of the second transducer 112 are non-parallel. Thus, even if the first transducer 111 and the second transducer 112 are close to each other, the first region 111a and the second region 112a can be appropriately separated. Therefore, the first transducer 111 and the second transducer 112 can be collectively installed on a ship bottom or the like. When the first transducer 111 and the second transducer 112 are installed in a single transducer module 110, the first transducer 111 and the second transducer 112 can be compactly stored.

As shown in Fig. 17A and Fig. 17B, the signal processing circuit 240 causes the display 130 to display the ship speed calculated by the speed calculation module 340 and information on the state of bubbles determined by the bubble determination module 330. Thus, the user can confirm the state of bubbles when visually grasping the ship speed. Thus, the user can grasp the effect of bubbles on the ship speed.

In addition, the signal processing circuit 240 causes the display 130 to display the ship speed and the information on the state of the bubbles side by side. Thus, the user can visually compare information on the ship speed and the state of bubbles. Thus, the user can smoothly grasp the effect of bubbles on the ship speed.

As shown in Fig.17A and Fig. 17B, the signal processing circuit 240 switches the display of the ship speed displayed on the display 130 based on the state of bubbles in water determined by the bubble determination module 330. Specifically, the bubble determination module 330 determines the presence or absence of bubbles at the present time based on the first bubble signal and the second bubble signal for a given period. If it is determined that no bubbles are generated in the water at the present time, the speed calculation module 340 calculates an average as the current ship speed. On the other hand, if it is determined that bubbles are generated in the water at the present time, the speed calculation module 340 does not calculate the present ship speed. As shown in Fig. 17A and Fig. 17B, the signal processing circuit 240 displays the ship speed in the ship speed display area 131 when no bubbles are generated, and displays a diagonal line in the ship speed display area 131 when bubbles are generated. If there are many bubbles in the water, the ship speed calculated by the speed calculation module 340 may be inaccurate. In such a case, by erasing the display of the ship speed, the display of the incorrect ship speed can be suppressed.

In addition, in order to avoid display of an incorrect ship speed, it is not necessary to install the first transducer 111 and the second transducer 112 on the bow 40a which is less affected by bubbles, so that it is not necessary to install wiring over a long distance from the display 130 installed in the steering room 41 or the like to the first transducer 111 and the second transducer 112 installed on the bow 40a. Therefore, the installation cost of the first transducer and the second transducer 112 can be greatly reduced.

When the bubble determination module 330 determines that there are bubbles in the water, the speed calculation module 340 stops the calculation of the current ship speed. If there are many bubbles in the water, the ship speed calculated by the speed calculation module 340 may be inaccurate.

According to the configuration of the first embodiment, in such a case, wasteful calculation processing of the ship speed can be suppressed. Also in this case, it is not necessary to install the first transducer 111 and the second transducer 112 on the bow 40a in order to avoid calculation of an incorrect ship speed. Therefore, the installation cost of the first transducer 111 and the second transducer 112 can be greatly reduced.

The first spectrum analysis module 311 and the second spectrum analysis module 312 analyse the first bubble signal and the second bubble signal, respectively. A bubble determination module 330 determines the state of bubbles in water based on spectrum data obtained by analysing the first bubble signal and the second bubble signal. As a result, compared with a method for evaluating the intensities of the first bubble signal and the second bubble signal, noise in a frequency band different from the frequency of the acoustic waves to be received can be eliminated, so that the state of bubbles in water can be determined with high accuracy.

As described with reference to the graphs of Fig. 9B and Fig. 10B, the bubble determination module 330 determines that bubbles exists in water when an amplitude equal to or greater than the threshold Ath is generated in the spectrum data based on the first bubble signal and the second bubble signal. When there are no bubbles in the water, the spectrum data based on the first bubble signal and the second bubble signal have amplitudes based on noise, but do not have amplitudes greater than the threshold Ath. On the other hand, when bubbles exist in water, an amplitude based on acoustic waves from the bubbles is superimposed on an amplitude based on noise on spectrum data based on the first bubble signal and the second bubble signal. Therefore, in this case, an amplitude equal to or greater than the threshold value Ath is generated in the spectrum data. Therefore, it is possible to determine whether or not bubbles exist in the water by determining whether or not an amplitude equal to or greater than the threshold value Ath is generated.

The first region 111a of the first transducer 111 is directed toward the bow 40a side, and the second region 112a of the second transducer 112 is directed toward the stern 40b side. As described above, when one of the two regions is directed toward the bow 40a side and the other is directed toward the stern 40b side, the transmission and receiving frequency shifts when the acoustic waves are transmitted in the bow 40a direction and the transmission and receiving frequency shifts when the acoustic waves are transmitted in the stern 40b direction can be measured by each of the transducers, respectively. Therefore, even if the hull 40 inclines forward and backward during navigation, the ship speed can be properly calculated by averaging the frequency shifts in each direction. Further, the two transducers arranged for this purpose can be shared for detecting bubbles. Therefore, the ship speed and bubbles can be appropriately detected while simplifying the structure.

### <Example of change>

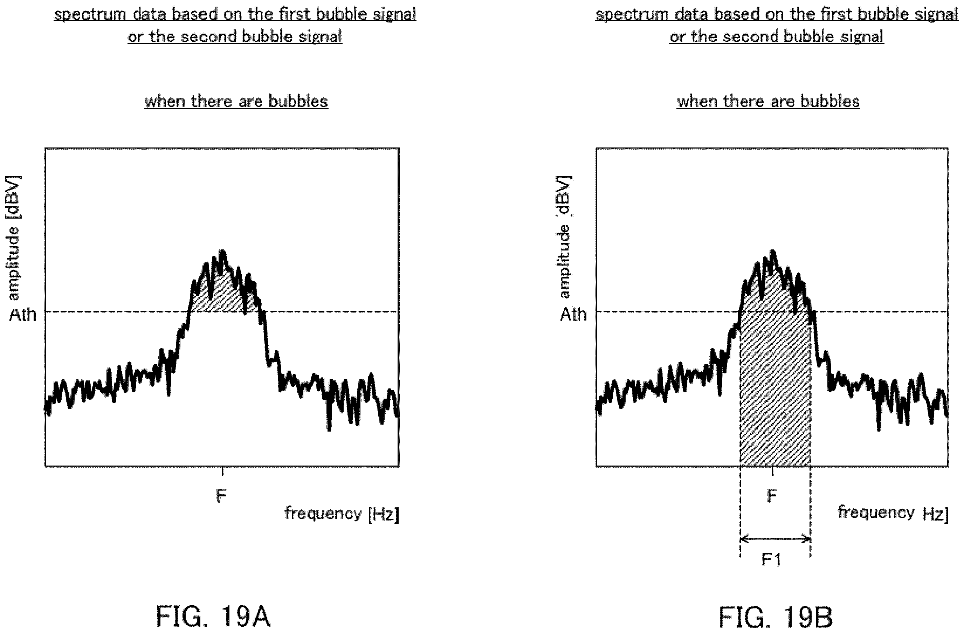

In the first embodiment, as described with reference to the graphs of Fig. 9B and Fig,10B, it is determined that bubbles exist in water when an amplitude equal to or greater than the threshold value Ath is generated in the spectrum data. However, the bubble determination method is not limited to this, and for example, as shown in the graph of Fig. 19A, it may be determined that bubbles exist in water when the signal area (shaded area) having an amplitude equal to or greater than the threshold value Ath exceeds a given value in the spectrum data. As shown in the graph of Fig. 19B, when the signal area (shaded area) in the frequency band F1 having an amplitude equal to or greater than the threshold Ath exceeds a given value in the spectrum data, it may be determined that there are bubbles in the water.

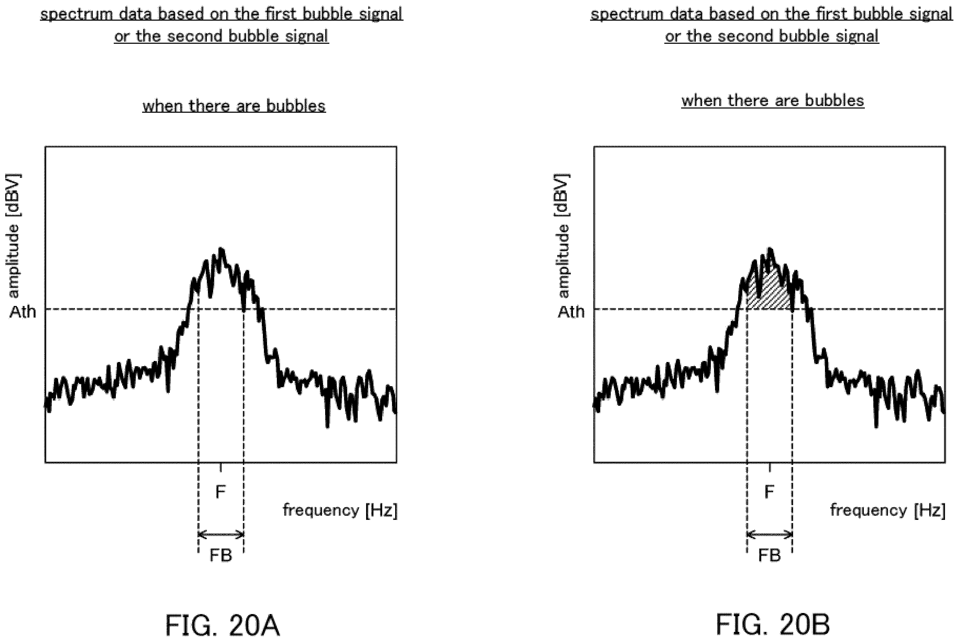

As shown in the graph of Fig. 20A, it may be determined that there are bubbles in the water when an amplitude equal to or greater than the threshold Ath is generated in the frequency band FB in a given range including the transmission frequency F of the original acoustic waves in the spectrum data. When the transmitted acoustic waves are scattered by bubbles, the frequency of the scattered acoustic waves is included in the vicinity of the transmission frequency F of the transmitted acoustic waves. Therefore, if the determination is performed in the frequency band FB within a given range including the transmission frequency F, it is possible to more accurately determine whether or not bubbles exist in the water.

As shown in the graph of Fig. 20B, in the frequency band FB of the spectrum data, when the signal area (shaded area) of the amplitude equal to or greater than the threshold Ath exceeds a given value, it may be determined that there are bubbles in the water.

In the first embodiment, the presence or absence of bubbles is determined based on the reception signal of the acoustic waves scattered by the bubbles, but the state of the bubbles to be determined is not limited to the presence or absence of bubbles. For example, the amount of bubbles may be determined based on a received signal of acoustic waves scattered by the bubbles. In this case, for example, in the configuration of first embodiment, in the spectrum data shown in the graph of Fig. 10B, the bubble determination module 330 determines the amount of bubbles existing in water based on the signal amount having an amplitude equal to or greater than the threshold Ath.

Here, the signal amount having an amplitude equal to or greater than the threshold value Ath can be obtained, for example, as the area (Total amplitude of each frequency component in frequency band F1) of the hatched area in the graph of Fig. 19B. Alternatively, the area of the hatched region in the graph of Fig. 19A may be used as a signal amount having an amplitude equal to or greater than the threshold Ath.

In this manner, when the amount of bubbles present in the water is determined, information regarding the amount of bubbles may be displayed on the display 130. In this case, the amount of bubbles may be displayed on a scale that changes continuously depending on a certain degree, or may be displayed in three levels of large, medium and small according to the magnitude relationship between the two thresholds and the determination result of the amount of bubbles. It is not limited to three levels, and the amount of bubbles may be indicated by other levels. Thus, the user can grasp how much bubbles exist in the water.

In the first embodiment, the threshold value Ath of the amplitude is a fixed value, but it is not limited to this, and the threshold value Ath may be determined based on the signal strength of the speed signal every time the determination is made based on the bubble signal. For example, when the determination is made based on the second bubble signal, the threshold Ath used in the determination of the second bubble signal may be determined based on the signal strength of the first speed signal. Similarly, when the determination is performed based on the first bubble signal, the threshold Ath used in the determination of the first bubble signal may be determined based on the signal strength of the second speed signal.

In the first example that is not part of the invention, when the strength of the reception signal of the reception transducer 12 is large, it is determined that there are bubbles in the water, but this is not limited to this, and bubble determination similar to that of the ship speed measuring device 2 of the first embodiment may be performed.

For example, in the bubble detection device 1, a spectrum analysis module may be provided, and the spectrum analysis module may analyse the signal received by the reception transducer 12. The bubble determination module 25a may determine the state of bubbles in water based on the spectrum data analysed by the spectrum analysis module.

At this time, as described with reference to the graphs of Fig. 9B and Fig. 10B, the bubble determination module 25a may determine that bubbles exist in water when an amplitude equal to or greater than a given threshold value is generated in the spectrum data. Further, as described with reference to the graph of Fig. 20A, the bubble determination module 25a may determine that there are bubbles in the water when an amplitude equal to or greater than a given threshold is generated in a frequency band in a given range including the transmission frequency of the acoustic waves transmitted by the transmission transducer 11 in the spectrum data. As described with reference to the graphs of Fig. 19A, Fig. 19B and Fig. 20B, the bubble determination module 25a may determine that there are bubbles in the water when the signal area exceeds a given value. The bubble determination module 25a may determine the amount of bubbles existing in water based on the signal area (amount of signal), or may determine the amount of bubbles existing in water based on the signal amount having an amplitude equal to or greater than the threshold Ath.

In the first embodiment, the first transducer 111 and the second transducer 112 are configured to transmit and receive acoustic waves, but instead of the first transducer 111, a first transmission transducer and a first reception transducer may be provided, and instead of the second transducer 112, a second transmission transducer and a second reception transducer may be provided. In this case, the first acoustic waves transmitted by the first transmission transducer are received by the first reception transducer, and a first speed signal is output from the first reception transducer. Similarly, the second acoustic waves transmitted by the second transmission transducer are received by the second reception transducer, and a second speed signal is output from the second reception transducer. When there are bubbles in the water, the first acoustic waves transmitted by the first transmission transducer are received by the second reception transducer by diffuse reflection, and a second bubble signal is outputted from the second reception transducer. Similarly, the second acoustic waves transmitted by the second transmission transducer are received by the first reception transducer by diffuse reflection, and a first bubble signal is output from the first reception transducer.

The first transducer 111 may transmit only the acoustic waves to the first region 111a or receive only the acoustic waves from the first region 111a, and the second transducer 112 may transmit only the acoustic waves to the second region 112a or receive only the acoustic waves from the second region 112a. When the first transducer 111 transmits the acoustic waves, the second transducer 112 receives the acoustic waves, and when the second transducer 112 transmits the acoustic waves, the first transducer 111 receives the acoustic waves.

In the first embodiment, as shown in Fig. 5, the surface 111b of the first transducer 111 and the surface 112b of the second transducer 112 are inclined in the direction facing to each other from the state in which they are facing to same direction, but this is not limited to this, and the surfaces 111b and 112b may be inclined in the direction opposite to the direction in which they are facing to each other from the state in which they are facing to same direction.

The center axis 111c of the first region 111a and the center axis 112c of the second region 112a may be parallel to each other. That is, the surface 111b of the first transducer 111 and the surface 112b of the second transducer 112 may be parallel to each other. In this case, so that the first region 111a and the second region 112a do not overlap, the first transducer 111 and the second transducer 112 are arranged so that a predetermined distance is left between the first transducer 111 and the second transducer 112.

In the first example that is not part of the invention, the display 30 may be omitted. In this case, the determination result of the bubble state by the bubble determination module 25a is transmitted to an external display, and the determination result of the bubble state is displayed on the external display. In the first embodiment, the display 130 may be omitted. In this case, the ship speed calculated by the speed calculation module 340 and the determination result of the bubble state by the bubble determination module 330 are transmitted to an external display, and the ship speed and the determination result of the bubble state are displayed on the external display.

In the first embodiment, although the speed calculating module 340 calculates the speed through the water, the speed over the ground may be calculated. The speed through the water is calculated based on reflected waves from plankton and fine particles, while the speed over the ground is calculated based on reflected waves from the seabed. In the case of the speed over the ground, similarly to the case of the speed through the water, the frequency deviation from the original acoustic waves is measured in the spectrum data obtained by analysing the first speed signal and the second speed signal, respectively, and the speed over the ground is calculated based on the measured frequency deviation.

Even when the speed over the ground is calculated in this manner, the propriety of the speed over the ground calculated in each cycle is determined based on the bubble signal acquired in accordance with the transmission of the acoustic waves for calculating the speed over the ground. The current speed over the ground is calculated based on the speed over the ground in a plurality of cycles up to the present time.

In the case where the speed over the ground is further calculated in the first embodiment, the speed of the tidal current may be calculated based on the speed through the water and the speed over the ground.

In the first embodiment, the determination of the state of bubbles in water is performed based on both the second acoustic waves received by the first transducer 111 and the first acoustic waves received by the second transducer 112, but the determination of the state of bubbles in water may be performed based on either the second acoustic waves received by the first transducer 111 or the first acoustic waves received by the second transducer 112. In this case, either the signal of the second acoustic waves received by the first transducer 111 (first bubble signal) or the signal of the first acoustic waves received by the second transducer 112 (second bubble signal) is analysed, and the state of the bubble is determined based on the generated spectrum data.

In the first embodiment, the ship speed measuring device 2 may further include a correction module that corrects the first speed signal based on the second bubble signal and corrects the second speed signal based on the first bubble signal. For example, the correction module subtracts spectrum data generated by analysing the second bubble signal from spectrum data generated by analysing the first speed signal for calculates corrected spectrum data based on the first speed signal, and subtracts spectrum data generated by analysing the first bubble signal from spectrum data generated by analysing the second speed signal for calculates corrected spectrum data based on the second speed signal. A speed calculation module 340 calculates the ship speed based on the corrected spectrum data based on the first speed signal and corrected spectrum data based on the second speed signal. Thus, it can be expected that the effect of bubbles on the signal (first and second speed signals) used for calculating the ship speed is suppressed and the ship speed is more accurately calculated.

In the first embodiment, since the measurement of the ship speed is stopped according to the state of the bubbles, the measurement result of the ship speed is not affected by the bubbles. Therefore, in order to avoid the influence of bubbles, it is not necessary to install the first transducer 111 and the second transducer 112 on the bow 40a. Therefore, it is not necessary to lay a long wiring cable between the first transducer 111 and the second transducer 112 and the controller 120 installed in the steering room 41 or the like, and the installation cost of the ship speed measuring device 2 can be greatly reduced.

In the first embodiment, as shown in Fig. 7, a received signal is directly input from the first A/D conversion circuit 231 and the second A/D conversion circuit 232 to the signal processing circuit 240, but a buffer memory may be provided between the first A/D conversion circuit 231 and the second A/D conversion circuit 232 and the signal processing circuit 240. In this case, the spectrum analysis module and the Doppler measurement module are of one system, and the received signal is read out from the buffer memory in time division and processed by the spectrum analysis module and the Doppler measurement module. A speed calculation module 340 calculates a ship speed based on the first speed signal and the second speed signal from the Doppler shift amount received in time division. The bubble determination module 330 determines the state of bubbles based on the first bubble signal and the second bubble signal from the spectrum data received in time division.

Further, in the first embodiment, the configuration in which the bubble detection device according to the present invention is applied to the ship speed measuring device 2 has been shown, but the bubble detection device according to the present invention is not limited to the ship speed measuring device 2, and may be appropriately applied to other devices such as an target detection device for detecting an target in water or an underwater detection device. For example, when the bubble detection device is applied to the target detection device, the screen (detection screen) indicating the detection result of the target may be invalidated in response to the generation of bubbles of a predetermined amount or more in the water.

Embodiments of the present invention may be modified in various ways as appropriate within the scope of the claims.

## Claims

1. An underwater detection device (1, 2) comprising:
a transmission transducer (11, 111, 112) configured to transmit acoustic waves to a transmission region (11a, 111a, 112a) in water;
a reception transducer (12, 111, 112) configured to receive acoustic waves reflected by bubbles in the transmission region (11a, 111a, 112a) and further reflected by bubbles in a reception region (12a, 111a, 112a); and
a bubble determination module (25a, 330) configured to determine a state of bubbles in water based on a signal received by the reception transducer (12, 111, 112)
**characterized in that**:
the reception region (12a, 111a, 112a) is different from the transmission region (11a, 111a, 112a);
a central axis of a transmission beam of the transmission transducer (11, 111, 112) and a central axis of a reception beam of the reception transducer (12, 111, 112) are non-parallel; and
a transmission surface of the transmission transducer (11, 111, 112) and a reception surface of the reception transducer (12, 111, 112) are facing in different directions.

2. The underwater detection device (1, 2) of any one of the preceding claims, further comprising:
a speed calculation module (340) configured to calculate a ship speed; and
a display (130) configured to display the ship speed and information on the state of bubbles.

3. The underwater detection device (1, 2) of claim 2, wherein,
the display (130) displays the ship speed and information on the state of bubbles side by side.

4. The underwater detection device (1, 2) of claim 3, wherein,
the speed calculation module (340) determines whether to display an indication of the ship speed based on the state of bubbles in water.

5. The underwater detection device (1, 2) of any one of claims 2 to 4, wherein,
the speed calculation module (340) stop the ship speed calculation when the bubble determination module (25a, 330) detects the existence of bubbles in water.

6. The underwater detection device (1, 2) of any one of the preceding claims, further comprising:
a spectrum analysis module (311, 312) configured to generate a spectrum data of the signal received by the reception transducer (12, 111, 112);
wherein,
the bubble determination module (25a, 330) determines the state of bubbles in water based on the spectrum data.

7. The underwater detection device (1, 2) of claim 6, wherein,
the bubble determination module (25a, 330) determines that bubbles exist in water when an amplitude equal to or greater than a given threshold value is generated in the spectrum data.

8. The underwater detection device (1, 2) of claim 7, wherein,
the bubble determination module (25a, 330) determines that bubbles exist in water when an amplitude equal to or greater than the given threshold value is generated in the spectrum data in a frequency band of a given range including a frequency of acoustic waves transmitted from the transmission transducer (11, 111, 112).

9. The underwater detection device (1, 2) of claim 7 or 8, wherein,
the bubble determination module (25a, 330) measures an amount of bubbles in water based on a signal amount having an amplitude equal to or greater than the given threshold in the spectrum data.

10. The underwater detection device (1, 2) of any one of the preceding claims, wherein,
one of the transmission region (11a, 111a, 112a) and the reception region (12a, 111a, 112a) is to be directed toward a bow direction and another is to be directed toward a stern direction.

11. A bubble detection method comprising:
transmitting acoustic waves to a transmission region (11a, 111a, 112a) in water,
receiving acoustic waves reflected by bubbles in the transmission region (11a, 111a, 112a), and further reflected by bubbles in a reception region (12a, 111a, 112a), and
determining a state of bubbles in water based on a receiving state of acoustic waves;
**characterized in that**:
the reception region (12a, 111a, 112a) is different from the transmission region (11a, 111a, 112a); and
a central axis of a transmission beam of the transmitted acoustic waves (11, 111, 112) and a central axis of a reception beam of the received acoustic wave (12, 111, 112) are non-parallel; and a transmission surface of the transmission transducer and a reception surface of the reception transducer (12, 111, 112) are facing to different directions.

12. A non-transitory computer-readable recording medium storing a control program comprising instructions which, when the program is executed by a processor of the bubble detection device according to claim 1 to cause the detection device to carry out the method of claim 11.

## Patentansprüche

1. Unterwassererkennungsgerät (1, 2), das Folgendes umfasst:
einen Sendewandler (11, 111, 112), der zum Senden von akustischen Wellen zu einer Senderegion (11a, 111a, 112a) in Wasser konfiguriert ist;
einen Empfangswandler (12, 111, 112), der zum Empfangen von akustischen Wellen konfiguriert ist, die von Blasen in der Senderegion (11a, 111a, 112a) reflektiert werden und weiter von Blasen in einer Empfangsregion (12a, 111a, 112a) reflektiert werden; und
ein Blasenbestimmungsmodul (25a, 330), das zum Bestimmen eines Zustands von Blasen in Wasser auf der Basis eines vom Empfangswandler (12, 111, 112a) empfangenen Signals konfiguriert ist;
**dadurch gekennzeichnet, dass**:
die Empfangsregion (12a, 111a, 112a) von der Senderegion (11a, 111a, 112a) verschieden ist;
eine zentrale Achse eines Sendestrahls des Sendewandlers (11, 111, 112) und eine zentrale Achse eines Empfangsstrahls des Empfangswandlers (12, 111, 112) nicht parallel zueinander sind; und
eine Sendefläche des Sendewandlers (11, 111, 112) und eine Empfangsfläche des Empfangswandlers (12, 111, 112) in unterschiedliche Richtungen weisen.

2. Unterwassererkennungsgerät (1, 2) nach einem der vorherigen Ansprüche, das ferner Folgendes umfasst:
ein Geschwindigkeitsberechnungsmodul (340), das zum Berechnen einer Schiffsgeschwindigkeit konfiguriert ist; und
ein Display (130), das zum Anzeigen der Schiffsgeschwindigkeit und von Informationen über den Zustand von Blasen konfiguriert ist.

3. Unterwassererkennungsgerät (1, 2) nach Anspruch 2, wobei
das Display (130) die Schiffsgeschwindigkeit und Informationen über den Zustand von Blasen nebeneinander anzeigt.

4. Unterwassererkennungsgerät (1, 2) nach Anspruch 3, wobei
das Geschwindigkeitsberechnungsmodul (340) bestimmt, ob eine Angabe der Schiffsgeschwindigkeit auf der Basis des Zustands von Blasen in Wasser angezeigt werden soll.

5. Unterwassererkennungsgerät (1, 2) nach einem der Ansprüche 2 bis 4, wobei
das Geschwindigkeitsberechnungsmodul (340) die Berechnung der Schiffsgeschwindigkeit stoppt, wenn das Blasenbestimmungsmodul (25a, 330) das Vorhandensein von Blasen in Wasser bestimmt.

6. Unterwassererkennungsgerät (1, 2) nach einem der vorherigen Ansprüche, das ferner Folgendes umfasst:
ein Spektrumanalysemodul (311, 312), das zum Erzeugen von Spektrumsdaten des vom Empfangswandler (12, 111, 112) empfangenen Signals konfiguriert ist;
wobei
das Blasenbestimmungsmodul (25a, 330) den Zustand von Blasen in Wasser auf der Basis der Spektrumsdaten bestimmt.

7. Unterwassererkennungsgerät (1, 2) nach Anspruch 6, wobei
das Blasenbestimmungsmodul (25a, 330) bestimmt, dass Blasen in Wasser vorhanden sind, wenn eine Amplitude genauso groß wie oder größer als ein gegebener Schwellenwert in den Spektrumsdaten erzeugt wird.

8. Unterwassererkennungsgerät (1, 2) nach Anspruch 7, wobei
das Blasenbestimmungsmodul (25a, 330) bestimmt, dass Blasen in Wasser vorhanden sind, wenn eine Amplitude genauso groß wie oder größer als der gegebene Schwellenwert in den Spektrumsdaten in einem Frequenzband eines gegebenen Bereichs erzeugt wird, der eine Frequenz von akustischen Wellen umfasst, die vom Sendewandler (11, 111, 112) übertragen werden.

9. Unterwassererkennungsgerät (1, 2) nach Anspruch 7 oder 8, wobei
das Blasenbestimmungsmodul (25a, 330) eine Menge von Blasen in Wasser auf der Basis eines Signalbetrags mit einer Amplitude misst, die genauso groß wie oder größer als der gegebene Schwellenwert in den Spektrumsdaten ist.

10. Unterwassererkennungsgerät (1, 2) nach einem der vorherigen Ansprüche, wobei
entweder die Senderegion (11a, 111a, 112a) oder die Empfangsregion (12a, 111a, 112a) in Richtung des Bugs und die jeweils andere in Richtung des Hecks gerichtet ist.

11. Blasenerkennungsverfahren, das Folgendes beinhaltet:
Senden von akustischen Wellen in eine Senderegion (11a, 111a, 112a) in Wasser,
Empfangen von akustischen Wellen, die von Blasen in der Senderegion (11a, 111a, 112a) reflektiert werden und weiter von Blasen in einer Empfangsregion (12a, 111a, 112a) reflektiert werden, und
Bestimmen eines Zustands von Blasen in Wasser auf der Basis eines Empfangszustands von akustischen Wellen;
**dadurch gekennzeichnet, dass**:
die Empfangsregion (12a, 111a, 112a) von der Senderegion (11a, 111a, 112a) verschieden ist; und
eine zentrale Achse eines Sendestrahls der gesendeten akustischen Wellen (11, 111, 112) und eine zentrale Achse eines Empfangsstrahls der empfangenen akustischen Welle (12, 111, 112) nicht parallel sind; und eine Sendefläche des Sendewandlers und eine Empfangsfläche des Empfangswandlers (12, 111, 112) in unterschiedliche Richtungen weisen.

12. Nichtflüchtiges, computerlesbares Aufzeichnungsmedium, das ein Steuerprogramm speichert, das Befehle umfasst, die bei Ausführung des Programms durch einen Prozessor des Blasenerkennungsgeräts nach Anspruch 1 das Erkennungsgerät veranlassen, das Verfahren nach Anspruch 11 durchzuführen.

## Revendications

1. Dispositif de détection sous-marine (1, 2) comprenant :
un transducteur d'émission (11, 111, 112) configuré pour émettre des ondes acoustiques vers une région d'émission (11a, 111a, 112a) dans l'eau ;
un transducteur de réception (12, 111, 112) configuré pour recevoir des ondes acoustiques réfléchies par des bulles dans la région d'émission (11a, 111a, 112a) et réfléchies en outre par des bulles dans une région de réception (12a, 111a, 112a) ; et
un module de détermination de bulles (25a, 330) configuré pour déterminer un état de bulles dans l'eau sur la base d'un signal reçu par le transducteur de réception (12, 111, 112),
le dispositif de détection sous-marine étant **caractérisé en ce que** :
la région de réception (12a, 111a, 112a) est différente de la région d'émission (11a, 111a, 112a) ;
un axe central d'un faisceau d'émission du transducteur d'émission (11, 111, 112) et un axe central d'un faisceau de réception du transducteur de réception (12, 111, 112) ne sont pas parallèles ; et
une surface d'émission du transducteur d'émission (11, 111, 112) et une surface de réception du transducteur de réception (12, 111, 112) sont orientées dans des directions différentes.

2. Dispositif de détection sous-marine (1, 2) selon l'une quelconque des revendications précédentes, comprenant en outre :
un module de calcul de vitesse (340) configuré pour calculer une vitesse de navire ; et
un module d'affichage (130) configuré pour afficher la vitesse de navire et des informations sur l'état de bulles.

3. Dispositif de détection sous-marine (1, 2) selon la revendication 2, dans lequel le module d'affichage (130) affiche côte à côte la vitesse de navire et les informations sur l'état de bulles.

4. Dispositif de détection sous-marine (1, 2) selon la revendication 3, dans lequel le module de calcul de vitesse (340) détermine s'il faut afficher une indication de la vitesse de navire sur la base de l'état de bulles dans l'eau.

5. Dispositif de détection sous-marine (1, 2) selon l'une quelconque des revendications 2 à 4, dans lequel le module de calcul de vitesse (340) arrête le calcul de vitesse de navire lorsque le module de détermination de bulles (25a, 330) détecte l'existence de bulles dans l'eau.

6. Dispositif de détection sous-marine (1, 2) selon l'une quelconque des revendications précédentes, comprenant en outre :
un module d'analyse spectrale (311, 312) configuré pour générer des données spectrales du signal reçu par le transducteur de réception (12, 111, 112) ;
le module de détermination de bulles (25a, 330) déterminant l'état de bulles dans l'eau sur la base des données spectrales.

7. Dispositif de détection sous-marine (1, 2) selon la revendication 6, dans lequel le module de détermination de bulles (25a, 330) détermine que des bulles existent dans l'eau lorsqu'une amplitude supérieure ou égale à une valeur seuil donnée est générée dans les données spectrales.

8. Dispositif de détection sous-marine (1, 2) selon la revendication 7, dans lequel le module de détermination de bulles (25a, 330) détermine que des bulles existent dans l'eau lorsqu'une amplitude supérieure ou égale à la valeur seuil donnée est générée dans les données spectrales dans une bande de fréquence d'une gamme donnée comprenant une fréquence d'ondes acoustiques émises par le transducteur d'émission (11, 111, 112).

9. Dispositif de détection sous-marine (1, 2) selon la revendication 7 ou 8, dans lequel le module de détermination de bulles (25a, 330) mesure une quantité de bulles dans l'eau sur la base d'une ampleur de signal ayant une amplitude supérieure ou égale au seuil donné dans les données spectrales.

10. Dispositif de détection sous-marine (1, 2) selon l'une quelconque des revendications précédentes, dans lequel l'une des régions d'émission (11a, 111a, 112a) et de réception (12a, 111a, 112a) est orientée vers une direction de proue et l'autre est orientée vers une direction de poupe.

11. Procédé de détection de bulles, comprenant les étapes consistant à :
émettre des ondes acoustiques vers une région d'émission (11a, 111a, 112a) dans l'eau,
recevoir des ondes acoustiques réfléchies par des bulles dans la région d'émission (11a, 111a, 112a) et réfléchies en outre par des bulles dans une région de réception (12a, 111a, 112a), et
déterminer un état de bulles dans l'eau sur la base d'un état de réception d'ondes acoustiques ;
le procédé étant **caractérisé en ce que** :
la région de réception (12a, 111a, 112a) est différente de la région d'émission (11a, 111a, 112a) ; et
un axe central d'un faisceau d'émission des ondes acoustiques émises (11, 111, 112) et un axe central d'un faisceau de réception des ondes acoustiques reçues (12, 111, 112) ne sont pas parallèles ; et
une surface d'émission du transducteur d'émission et une surface de réception du transducteur de réception (12, 111, 112) sont orientées dans des directions différentes.

12. Support d'enregistrement non transitoire lisible par ordinateur, stockant un programme de commande comprenant des instructions qui, lorsque le programme est exécuté par un processeur du dispositif de détection de bulles selon la revendication 1, amènent le dispositif de détection à réaliser le procédé selon la revendication 11.
